# EUROPÄISCHE PATENTSCHRIFT

(11) **EP 1 506 350 B1**
(45) Veröffentlichungstag und Bekanntmachung des Hinweises auf die Patenterteilung: **02.11.2006**
(21) Anmeldenummer: 03732401.9
(22) Anmeldetag: 16.05.2003
(51) Int. Cl.: F16B 39/28, F16B 41/00, B25B 13/48

(54) **SCHRAUBEN-MUTTERN-ANORDNUNG MIT INTEGRIERTER, SOFORT WIRKENDER SICHERUNG GEGEN UNBEABSICHTIGTES LÖSEN EINER DAMIT GEBILDETEN SCHRAUBVERBINDUNG**
SCREW-NUT ASSEMBLY HAVING AN INTEGRATED IMMEDIATELY EFFECTIVE SAFEGUARDING AGAINST UNINTENTIONAL LOOSENING OF A SCREW CONNECTION FORMED THEREWITH
SYSTEME VIS-ECROUS A SECURITE INTEGREE, A EFFET IMMEDIAT CONTRE TOUT DEVISSAGE INOPINE D'UN ASSEMBLAGE PAR VIS AINSI OBTENU

(30) Priorität: 17.05.2002 DE 10222107
(43) Veröffentlichungstag der Anmeldung: 16.02.2005
(73) Patentinhaber: Weiss, Wolfgang, 85521 Ottobrunn (DE)
(72) Erfinder: NIEDERHAGEBÖCK, Guilherme, 81547 München (DE)
(74) Vertreter: Schlimme, Wolfram
(86) Internationale Anmeldenummer: PCT/EP2003/005199
(87) Internationale Veröffentlichungsnummer: WO 2003/098058

(56) Entgegenhaltungen:
- DE-A- 2 215 092
- DE-A- 3 630 002
- DE-A- 19 837 129
- US-A- 1 334 389
- US-A- 6 010 289

## Beschreibung

Die Erfindung betrifft eine Schrauben-Muttern-Anordnung mit integrierter, sofort wirkender Sicherung gegen unbeabsichtigtes Lösen einer damit gebildeten Schraubverbindung, mit einem ersten Schraubverbindungskörper und einem zugeordneten zweiten Schraubverbindungskörper. Die Bezeichnung Schrauben-Muttern-Anordnung ist in dieser Anmeldung so zu verstehen, daß jegliche Art von Schraubverbindungen mit einer Paarung von Außen- und Innengewinde umfaßt ist.

Üblicherweise werden zum Sichern von Schrauben-Muttern-Verbindungen Sicherungsscheiben verwendet, die beim Aufsetzen der Schraube oder der Mutter unter dieser angeordnet werden und die diese durch Federspannung oder Reibungskräfte daran hindern, sich selbsttätig zu lösen.

Weiterhin ist es bekannt, Muttern durch zusätzlichen Formschluß mit der Schraube oder einem anderen schraubenfesten Teil zu sichern, beispielsweise durch Splinte, Sicherungsdrähte oder ähnliches. Auch hier muß ein zusätzliches Element zum Sichern der Schraube bei der Schraubenmontage angebracht und vor deren Lösen entfernt werden. Diese vorgenannten Techniken weisen somit keine integrierte Sicherung der Schrauben-Muttern-Verbindung auf.

Selbstsichernde Muttern und Schrauben mit einem integrierten Sicherungselement, bei denen eine sofortige Sicherung gegen Lösen durch Reibschluß an den Gewindeflanken erzielt wird, sind außerdem bekannt. Nachteilig dabei ist jedoch, daß die erhöhte, lösungshemmende Reibung bereits beim Verschrauben auftritt, so daß schon zur Vormontage Schraubwerkzeuge eingesetzt werden müssen.

Bei Sicherungen von singulären Schrauben-Muttern-Verbindungen, welche bis zum Einsatz der Sicherung ein Verdrehen der Schrauben-Muttern-Verbindung ermöglichen, kann sich die Vorspannung innerhalb der Schrauben-Muttern-Verbindung in Abhängigkeit von der Art der Schraubensicherung bis zum Wirksamwerden der Schraubensicherung bis auf Null reduzieren. Wegen der dann fehlenden Vorspannung können die mittels der Schrauben-Muttern-Verbindung verschraubten Teile Relativbewegungen ausführen, wenn Kräfte auf diese Teile einwirken. Diese Relativbewegungen üben ihrerseits hohe Kräfte auf die Schrauben-Muttern-Verbindung aus, die bis zur Zerstörung der Schrauben-Muttern-Verbindung oder von deren Sicherungseinrichtung führen können. Derartige Zerstörungen sind beispielsweise bei Zentralverschlußrädern im Motorsport bereits vorgekommen.

In der Kraftfahrzeugtechnik ist es seit langem bekannt, ein unbeabsichtigtes Öffnen von Radmuttern, insbesondere bei sogenannten Zentralverschlüssen, mittels mechanisch wirkender integrierter Hilfsmittel zu verhindern. So offenbart zum Beispiel die DE 249 305 einen Zentralverschluß für ein Fahrzeugrad, bei welchem eine Radmutter an ihrer in Aufschraubrichtung gesehen vorderen Seite mit einem ringförmigen Bund mit Innenverzahnung versehen ist. Diese Innenverzahnung wirkt mit einer Außenverzahnung auf einer auf der Radnabe angeordneten und gegen eine Federkraft axial verschiebbaren Buchse zusammen, welche drehfest mit der Radnabe verbunden ist. Beim Aufschrauben der Radmutter mittels eines Spezialwerkzeugs auf die Radnabe werden in der Mutter achsparallel verschiebbar angeordnete Stifte vom Werkzeug in Aufschraubrichtung nach vorne gedrückt und halten die Buchse von der Mutter beabstandet. Erst beim Abnehmen des Werkzeugs wird die Buchse unter Federkraft zur Mutter hin gedrückt, wobei die Außenverzahnung der Buchse in die Innenverzahnung im Bund der Mutter eingreift und diese somit am weiteren Verdrehen in beide Drehrichtungen hindert. Bei dieser Sicherung ist es jedoch erforderlich, daß die Mutter im richtigen Winkel zur Buchse steht, damit die Verzahnungen ineinandergreifen können. Diese Mutternsicherung ist somit nicht stufenlos. Muß die Mutter mit einem vorgegebenen Drehmoment angezogen werden, so ist es nach dem korrekten Anziehen der Mutter in der Regel erforderlich, diese noch um einige Winkelgrade vor oder zurück zu drehen, um ein Verrasten und damit die Mutternsicherung zu ermöglichen.

Eine stufenlose Mutternsicherung bei einem Zentralverschluß für ein Fahrzeugrad ist aus der DE 263 371 bekannt. Dort ist die Mutter im Bereich ihrer mit dem Innenumfang der Radfelgenbohrung in Kontakt geratenden Außenumfangsfläche mit einem Bremshebel versehen, der von einer Feder beaufschlagt gegen den Innenumfang der Felgenbohrung gedrückt wird. Der Hebel ist geringfügig exzentrisch gelagert, so daß er sich an der Innenumfangsfläche verklemmt, wenn die Mutter in Öffnungsrichtung gedreht wird. Zum Lösen der Mutter muß der Hebel mit einem zusätzlichen Werkzeug entgegen der Federkraft verschwenkt werden, um die Verklemmung aufzuheben. Diese Vorrichtung ist aufwendig und teuer in der Fertigung und in der Praxis umständlich und nur mit Einschränkung zuverlässig handhabbar.

Die US 6,010,289 A offenbart eine Schrauben-Muttern-Anordnung mit integrierter, sofort wirkender Sicherung gegen unbeabsichtigtes Lösen einer damit gebildeten Schraubverbindung, wobei ein Gewindebolzen im Bereich seines Schafts oder im Bereich des Gewindes mit zumindest einer in Längsrichtung des Bolzens verlaufenden Rastnut versehen ist, in welche an einer zugeordneten Gewindemutter vorgesehene Rastlaschen einhaken können, die zwar ein Festschrauben der Schrauben-Muttern-Verbindung ermöglichen, jedoch das Lösen der Schrauben-Muttern-Verbindung verhindern. Ein Lösen dieser bekannten Schrauben-Muttern-Verbindung ist entweder durch zerstörerische Maßnahmen, durch gewaltsames Aufbiegen der Rastlaschen oder bei einer speziell ausgebildeten Mutter durch Verdrehen eines zylindrischen Entriegelungsabschnitts möglich, der bei einer Verdrehung die Rastlaschen außer Eingriff mit der jeweils zugeordneten Rastnut bringt.

Aufgabe der vorliegenden Erfindung ist es, eine gattungsgemäße Schrauben-Muttern-Anordnung mit integrierter, sofort wirkender Sicherung gegen unbeabsichtigtes Lösen einer damit gebildeten Schraubverbindung anzugeben, die eine zuverlässige Verriegelung gewährleistet und einfach sowie schnell handhabbar ist.

Diese Aufgabe wird erfindungsgemäß dadurch gelöst, daß einer der beiden Schraubverbindungskörper einen drehfest mit diesem verbundenen Freilauf aufweist und daß zwischen dem Freilauf und dem anderen der beiden Schraubverbindungskörper eine Kupplungsanordnung vorgesehen ist, um die beiden Schraubverbindungskörper drehfest miteinander zu verbinden und voneinander zu lösen.

Das Vorsehen des Freilaufs als verdrehsicherung gegen unbeabsichtigtes Lösen der Schraubverbindung sorgt für eine präzise und unmittelbar in jeder beliebigen Verdrehstellung sofort wirksame stufenlose Schraubensicherung.

Eine bevorzugte Ausführungsform zeichnet sich dadurch aus, daß zumindest der erste Schraubverbindungskörper eine Axialbohrung aufweist, daß der Freilauf in der Axialbohrung des ersten Schraubverbindungskörpers angeordnet ist und ein Mitnehmerteil in der Axialbohrung des ersten Schraubverbindungskörpers in die dem Verschrauben der Schraubverbindung entsprechende Drehrichtung drehbar lagert, daß der Freilauf in die einem Lösen der Schraubverbindung entsprechende Drehrichtung sperrt, daß der zweite Schraubverbindungskörper erste Kupplungsmittel aufweist, die mit zweiten Kupplungsmitteln am Mitnehmerteil zusammenwirken, daß die ersten Kupplungsmittel und die zweiten Kupplungsmittel so ausgebildet sind, daß sie beim Verschrauben der Schraubverbindungskörper selbsttätig ineinandergreifen und eine drehfeste Verbindung zwischen dem zweiten Schraubverbindungskörper und dem Mitnehmerteil schaffen und daß eine Entkopplungsvorrichtung vorgesehen ist, um die Kupplungsmittel zum Lösen der Schraubverbindung voneinander zu entkoppeln.

Durch das selbsttätige Einkuppeln des mit dem ersten Schraubverbindungskörper verschraubten zweiten Schraubverbindungskörpers mit dem Mitnehmerteil und durch das Vorsehen des in Öffnungsrichtung der Schrauben-Muttern-Anordnung sperrenden Freilaufs, welcher nach erfolgtem Einkuppeln auf die Schrauben-Muttern-Anordnung sperrend wirkt, ist eine zuverlässig wirkende, stufenlose und kontinuierliche Sicherung der verschraubten Schrauben-Muttern-Anordnung gewährleistet, indem eine Relativ-Verdrehung zwischen Schraube und Mutter in Öffnungsrichtung sicher verhindert ist.

Eine alternative Ausgestaltungsform zeichnet sich dadurch aus, daß der erste und der zweite Schraubverbindungskörper jeweils eine Axialbohrung aufweisen, daß der Freilauf in der Axialbohrung des zweiten Schraubverbindungskörpers angeordnet ist, daß ein Mitnehmerteil in die Axialbohrung des ersten Schraubverbindungskörpers drehfest eingesetzt ist, daß der Freilauf erste Kupplungsmittel, die mit zweiten Kupplungsmitteln am Mitnehmerteil zusammenwirken, in die dem Verschrauben der Schraubverbindung entsprechende Drehrichtung drehbar lagert, daß der Freilauf in die einem Lösen der Schraubverbindung entsprechende Drehrichtung sperrt, daß die ersten Kupplungsmittel und die zweiten Kupplungsmittel so ausgebildet sind, daß sie beim Verschrauben der Schraubverbindungskörper selbsttätig ineinandergreifen und eine drehfeste Verbindung zwischen dem zweiten Schraubverbindungskörper und dem Mitnehmerteil schaffen und daß eine Entkopplungsvorrichtung vorgesehen ist, um die Kupplungsmittel zum Lösen der Schraubverbindung voneinander zu entkoppeln.

Diese Ausführungsform ist sehr kompakt aufgebaut und eignet sich auch für Schraubverbindungen mit kleineren Gewindedurchmessern.

Vorzugsweise weist der Freilauf einen Käfig mit Walzen auf, die mit rampenartigen Sperrflächen in einem Lagerring zusammenwirken. Der Lagerring kann dabei entweder radial innerhalb oder radial außerhalb des Käfigs mit den Walzen gelegen sein.

Alternativ dazu weist der Freilauf einen Käfig mit Walzen auf, die mit rampenartigen Sperrflächen am Außenumfang einer in den mit den Walzen versehenen Käfig eingesetzten Hülse zusammenwirken.

Bei einer anderen alternativen Ausführungsform weist der Freilauf einen Käfig mit Walzen auf, die mit rampenartigen Sperrflächen am Innenumfang der den mit den Walzen versehenen Käfig aufnehmenden Axialbohrung zusammenwirken.

In einer vorteilhaften Weiterbildung ist das Mitnehmerteil in der Axialbohrung axial verschiebbar aufgenommen. Hierdurch wird eine mechanisch einfache und zuverlässige Ver- und Entkopplung der beiden Kupplungsmittel ermöglicht.

Dabei ist es besonders vorteilhaft, wenn das Mitnehmerteil von einem federnden Element in Richtung des axialen Endes des ersten Schraubverbindungskörpers vorgespannt ist, von dem aus der zweite Schraubverbindungskörper mit dem ersten Schraubverbindungskörper verschraubt wird. Hierdurch wird das selbsttätige Ineinandergreifen der Kupplungsmittel auf besonders vorteilhafte Weise unterstützt.

Bei einer bevorzugten vorteilhaften Weiterbildung der Erfindung sind die ersten oder die zweiten Kupplungsmittel von Zapfen gebildet und die entsprechenden Gegenkupplungsmittel (die zweiten Kupplungsmittel beziehungsweise die ersten Kupplungsmittel) sind von zugeordneten Zapfenaufnahmen gebildet. Diese Ausgestaltung der Kupplungsmittel ermöglicht ein zuverlässiges sicheres Verkuppeln des zweiten Schraubverbindungskörpers mit dem Mitnehmerteil und ist in der Lage, auch hohe Drehmomente sicher und zuverlässig zu übertragen.

Dabei ist es besonders vorteilhaft, wenn sich die Zapfen und die Zapfenaufnahmen mit ihren jeweiligen Längsachsen parallel zur Axialrichtung erstrecken. Diese Ausführungsform ist besonders platzsparend, so daß die erfindungsgemäße Schrauben-Muttern-Anordnung auch mit kleineren Schraubendurchmessern realisiert werden kann.

Bei einer besonders vorteilhaften Ausführungsform sind dabei die Zapfenaufnahmen in einer Stirnseite des Mitnehmerteils ausgebildet und die Zapfen stehen aus einer entsprechenden Radialfläche des zweiten Schraubverbindungskörpers hervor.

Alternativ können die Zapfenaufnahmen in einer Radialfläche des zweiten Schraubverbindungskörpers ausgebildet sein und die Zapfen aus der Stirnseite des Mitnehmerteils hervorstehen.

Dabei ist es besonders vorteilhaft, wenn die Zapfen und die Zapfenaufnahmen kreisringförmig angeordnet sind, wenn sich einander benachbarte Zapfenaufnahmen überschneiden, so daß die Zapfenaufnahmen ringnutartig miteinander verbunden sind und wenn die Zapfen jeweils am freien Ende verjüngt ausgebildet sind. Diese Ausführungsform, bei der die Breite der Ringnut, in Radialrichtung gemessen, variiert, sorgt für ein schnelles und zuverlässiges Einrasten der Zapfen in die Zapfenaufnahmen, da die Zapfen mit ihren verjüngten Enden beim Verschrauben zuverlässig zur jeweils nächsten Zapfenaufnahme geführt werden, wo sie dann mit dieser in Formschlußeingriff geraten, so daß der aufgeschraubte zweite Schraubverbindungskörper bereits in diesem Moment das Mitnehmerteil zuverlässig in Drehrichtung mitnimmt.

Vorteilhafterweise weist der zweite Schraubverbindungskörper eine Öffnung, vorzugsweise eine zentrale axiale Öffnung auf, durch die hindurch das Mitnehmerteil zur Axialverschiebung betätigbar ist. Durch diese Öffnung läßt sich zum Lösen des zweiten Schraubverbindungskörpers das Mitnehmerteil in Axialrichtung verschieben, so daß die Kupplungsmittel außer Eingriff geraten und der zweite Schraubverbindungskörper frei in Öffnungsrichtung der Schraubverbindung drehbar ist.

Vorzugsweise ist der erste, das Mitnehmerteil aufweisende Schraubverbindungskörper mit einem Außengewinde versehen und der zweite Schraubverbindungskörper ist mit einem Innengewinde als Mutter ausgebildet. Diese Ausführungsform eignet sich besonders bei Schraubverbindungen mit großem Gewindedurchmesser, wie beispielsweise bei Zentralverschlüssen für Fahrzeugräder. Eine inverse Anordnung der Teile ist aber auch möglich, wobei dann das Mitnehmerteil in der Mutter angeordnet ist, in welche dann eine an ihrer freien Stirnseite mit Kupplungsmitteln versehene Schraube eingeschraubt wird. Die Schraube kann eine axiale oder achsparallele Bohrung aufweisen, durch welche das Mitnehmerteil dann zur Axialverschiebung betätigbar ist.

Eine bevorzugte Verwendung der erfindungsgemäßen Schrauben-Muttern-Anordnung erfolgt in einem Zentralverschluß für ein Fahrzeugrad.

Obwohl die erfindungsgemäße Schrauben-Muttern-Anordnung grundsätzlich auch mit einem herkömmlichen Werkzeug geöffnet werden kann, wenn die Kupplungsmittel voneinander entkoppelt sind, ist es vorteilhaft, wenn dieses mit einem speziell angepaßten Schraubwerkzeug durchgeführt wird.

Diese Aufgabe wird gelöst von einer Kombination aus einer erfindungsgemäßen Schrauben-Muttern-Anordnung und einem Schraubwerkzeug zum Herstellen und zum Lösen einer Schraubverbindung mit einer Schrauben-Muttern-Anordnung der erfindungsgemäßen Art, mit einem Profil, welches zur drehfesten Kopplung mit einem Gegenprofil an einem der Schraubverbindungskörper zusammenwirkt, wobei das Schraubwerkzeug mit einer Betätigungsvorrichtung versehen ist, die in eine Entriegelungsposition bringbar ist, in der das Mitnehmerteil in Axialrichtung verschoben ist, um zum Lösen der Schraubverbindung die ersten Kupplungsmittel von den zweiten Kupplungsmitteln zu entkoppeln. Dieses Schraubwerkzeug ermöglicht in einem einzigen Arbeitsgang das Entriegeln der Kupplungsverbindung und das Öffnen des zweiten Schraubverbindungskörpers.

Vorteilhafterweise ist am Schraubwerkzeug ein Betätigungselement vorgesehen, das zum Lösen der Schraubverbindung zum Entkoppeln der Kupplungsmittel voneinander das Mitnehmerteil in Axialrichtung verschiebt.

Besonders vorteilhaft ist es, wenn das Schraubwerkzeug als Adapter für ein herkömmliches Schraubwerkzeug ausgebildet ist, so daß die Betätigung der erfindungsgemäßen Schrauben-Muttern-Anordnung auch mit einem herkömmlichen Werkzeug unter Einsatz lediglich eines Adapters möglich ist. Auf diese Weise ist insbesondere gewährleistet, daß eventuell vorhandene maschinelle Schrauber ohne zusätzlichen Umrüstaufwand weiter verwendet werden können.

Die Erfindung wird nachfolgend anhand eines Beispiels unter Bezugnahme auf die Zeichnung näher erläutert. In dieser zeigt:
- **Fig. 1.**: eine erste Ausführungsform der erfindungsgemäßen Schrauben-Muttern-Anordnung mit teilweise aufgeschraubter Mutter;
- **Fig. 2.**: die erste Ausführungsform bei vollständig aufgeschraubter Mutter;
- **Fig. 3.**: eine Schnittansicht der ersten Ausführungsform entlang Linie III-III in Fig. 2;
- **Fig. 4.**: eine Schnittansicht der ersten Ausführungsform entlang der Linie IV-IV in Fig. 2;
- **Fig. 5.**: eine Darstellung der ersten Ausführungsform in entriegeltem Zustand;
- **Fig. 6.**: eine zweite Ausführungsform der erfindungsgemäßen Schrauben-Muttern-Anordnung bei teilweise aufgeschraubter Mutter;
- **Fig. 7.**: die zweite Ausführungsform bei vollständig aufgeschraubter Mutter;
- **Fig. 8.**: eine Stirnansicht der zweiten Ausführungsform in Richtung der Pfeile VIII-VIII in Fig. 6;
- **Fig. 9.**: eine Schnittansicht entlang der Linie IX-IX in Fig. 6;
- **Fig. 10.**: eine Darstellung der zweiten Ausführungsform in entriegeltem Zustand;
- **Fig. 11.**: eine Längsschnittansicht einer dritten Ausführungsform der erfindungsgemäßen Schrauben-Muttern-Anordnung mit teilweise aufgeschraubter Mutter;
- **Fig. 12.**: eine Längsschnittansicht der dritten Ausführungsform mit vollständig aufgeschraubter Mutter;
- **Fig. 13.**: eine Schnittansicht entlang der Linie XIII-XIII in Fig. 10;
- **Fig. 14.**: eine Schnittansicht entlang der Linie XIV-XIV in Fig. 10;
- **Fig. 15.**: eine Darstellung der dritten Ausführungsform in entriegeltem Zustand;
- **Fig. 16.**: eine Anwendung der ersten Ausführungsform als Zentralverschluß für ein Fahrzeugrad und
- **Fig. 17.**: ein Schraubwerkzeug für die erfindungsgemäße Schrauben-Muttern-Anordnung.

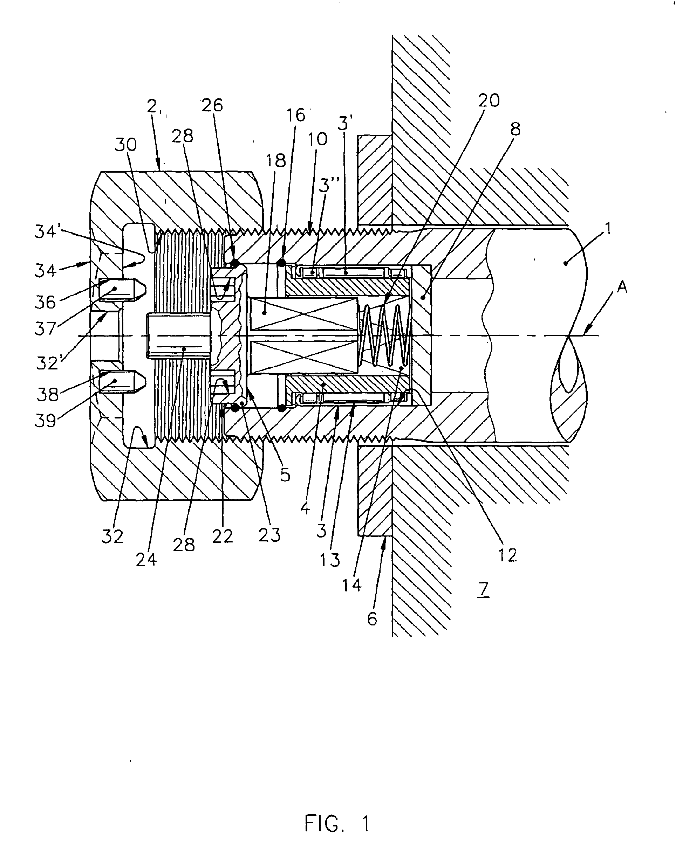

In Fig. 1 ist eine erste Ausführungsform der erfindungsgemäßen Schrauben-Muttern-Anordnung bei teilweise aufgeschraubter Mutter gezeigt. Eine an ihrem freien, aus einer Bohrung in einem Werkstück 7 hervorstehenden Ende mit einem Außengewinde 10 versehene Schraube 1 weist eine zentrale axiale Bohrung 12 auf, die sich zum freien Ende der Schraube 1 hin öffnet.

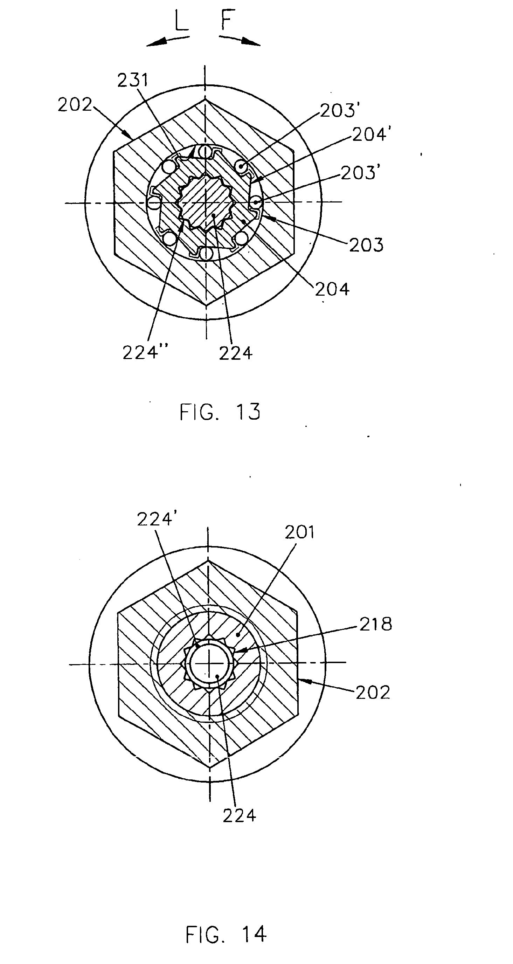

In die axiale Bohrung 12 ist ein Freilauf 3 derart eingesetzt, daß ein äußerer Lagerring 13 des als Freilauflager ausgebildeten Freilaufs 3 drehfest mit der Schraube 1 verbunden ist, was auf dem Fachmann bekannte Weise, beispielsweise durch eine Spannungsverbindung (mit oder ohne Reibschluß) oder auch durch eine Formschlußverbindung, erfolgen kann. Der Freilauf 3 weist einen äußeren Lagerring 13 und darin angeordnete Freilaufwalzen 3' und Lagerwalzen 3" auf. Die Freilaufwalzen 3' wirken mit Sperrflächen im äußeren Lagerring zusammen und laufen auf einer Außenumfangsfläche einer in den Freilauf 3 eingesetzten Führungshülse 4. Der Freilauf 3 läßt eine Verdrehung der Führungshülse 4 um die Achse A in eine Drehrichtung zu, die einem Verschrauben der Schraube 1 mit einer auf das Gewinde 10 aufgesetzten Mutter 2 entspricht, und sperrt in Öffnungsrichtung dieser Schraubverbindung. Die genaue Arbeitsweise eines Freilaufs wird weiter unten in Verbindung mit Fig. 13 beschrieben.

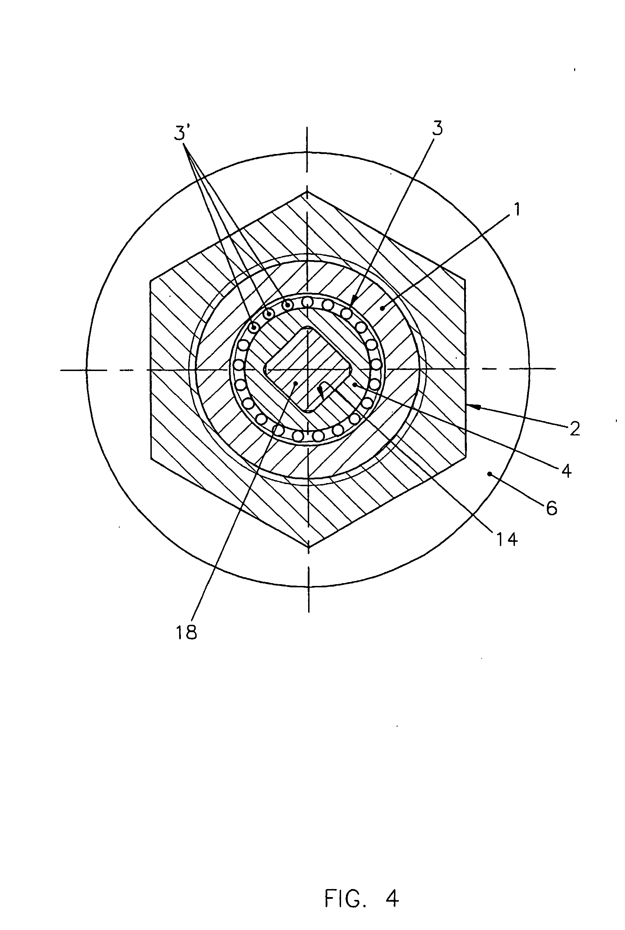

Die Führungshülse 4 ist mit einer axialen Aufnahmeöffnung 14 versehen, die einen im wesentlichen quadratischen Querschnitt aufweist, wie in Fig. 4 zu erkennen ist. Anstelle des quadratischen Querschnitts kann auch ein beliebiger anderer polygonaler Querschnitt oder eine beliebige andere drehfeste, aber axial (in Richtung der Achse A) verschiebbare Verbindung vorgesehen sein.

Die axiale Aufnahmeöffnung 14 erstreckt sich durch die gesamte Länge der Führungshülse 4 hindurch. Mit ihrem zum Schraubeninneren weisenden axialen Ende liegt die Führungshülse 4 an einer in die zentrale axiale Bohrung 12 der Schraube 1 eingesetzten Bodenplatte 8 an, welche sich an einer Radialschulterfläche der abgestuften Bohrung 12 in Axialrichtung abstützt. An ihrem dem freien Ende der Schraube 1 zugewandten Ende ist die Führungshülse 4 mittels einem in eine umlaufende Nut im Innenumfang der Bohrung 12 eingesetzten Sicherungsring 16 in Axialrichtung gegen Verschieben gesichert. Der Axialabstand zwischen der Bodenplatte 8 und dem Sicherungsring 16 ist jedoch geringfügig größer als die axiale Länge der Führungshülse 4, so daß deren Drehbarkeit um die Längsachse A nicht behindert ist.

Ein nachstehend beschriebenes Mitnehmerteil 5 ist mit einem in Axialrichtung hervorstehenden Vierkantzapfen 18 axial verschiebbar in die axiale vierkantförmige Aufnahmeöffnung 14 passend eingesetzt. In der Aufnahmeöffnung 14 ist eine axial wirkende Druckfeder 20 vorgesehen, die sich einerseits gegen die Bodenplatte 8 und andererseits gegen die freie Stirnseite des Vierkantzapfens 18 abstützt.

Das Mitnehmerteil 5 weist einen mittleren scheibenförmigen Abschnitt 22 auf, an den sich auf der in die Bohrung 12 weisenden Seite in Axialrichtung der Vierkantzapfen 18 anschließt und an den sich auf der vom Vierkantzapfen 18 abgewandten Seite in Axialrichtung ein zylindrischer Betätigungszapfen 24 anschließt. Der mittlere scheibenförmige Abschnitt 22 ist an seinem Außenumfang mit einem Ringvorsprung 23 versehen, der in der zentralen axialen Bohrung 12 aufgenommen ist und der eine umlaufende Anschlagschulter bildet, mit der der mittlere scheibenförmige Abschnitt 22 des Mitnehmerteils 5 derart gegen einen Sicherungsring 26 anliegt, welcher in einer im Innenumfang der zentralen axialen Bohrung 12 in der Nähe des freien Endes der Schraube 1 ausgebildeten umlaufenden Nut aufgenommen ist, so daß das Mitnehmerteil 5 daran gehindert ist, aus der zentralen axialen Bohrung 12 vollständig herauszutreten.

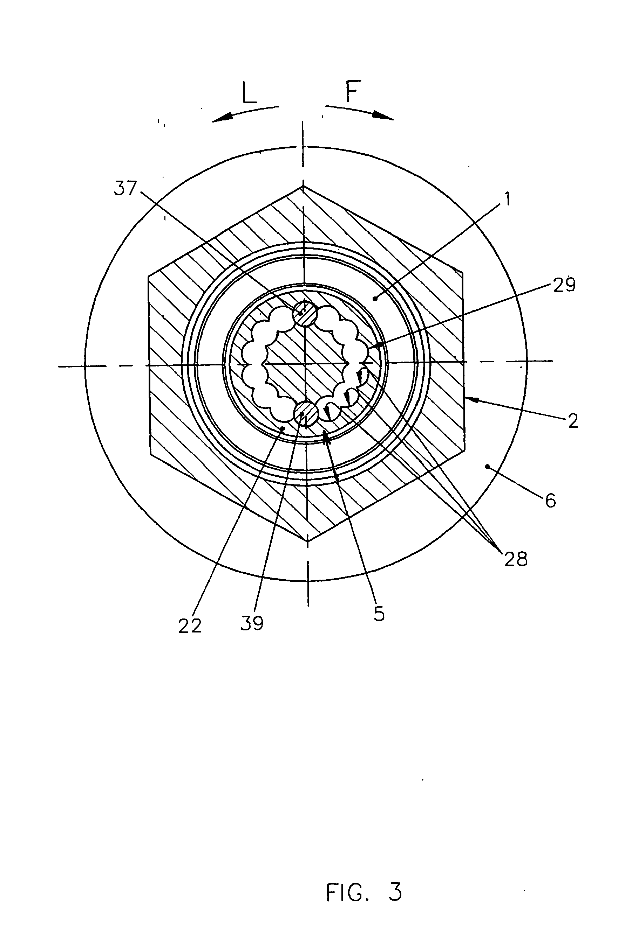

Auf seiner vom Vierkantzapfen 18 abgewandten ringförmigen Stirnfläche ist der mittlere scheibenförmige Abschnitt 22 des Mitnehmerteils 5, wie in Fig. 3 zu sehen ist, mit einer Vielzahl von kreisringförmig angeordneten achsparallelen Bohrungen 28 versehen. Die achsparallelen Bohrungen 28 dienen als Zapfenaufnahmen für in der Mutter 2 vorgesehene Zapfen und bilden zusammen mit diesen eine Kupplungsverbindung 9, wie weiter unten noch beschrieben werden wird.

Wie in Fig. 3 weiter zu erkennen ist, sind die Bohrungen 28 derart kreisringförmig im mittleren scheibenförmigen Abschnitt 22 des Mitnehmerteils 5 angeordnet, daß einander benachbarte achsparallele Bohrungen 28 ineinandergreifen und sich überschneiden, so daß sie einen Bohrungskranz 29 bilden. Auf diese Weise ergibt sich ein ringnutartiges Gebilde, dessen Nutbreite in Radialrichtung des Mitnehmerteils 5 entsprechend der Kontur der auf einem Kreisring nebeneinander gelegenen Bohrungen 28 variiert.

Die in Fig. 1 lediglich teilweise auf die Schraube 1 aufgeschraubte Mutter 2 bildet einen zweiten mit einem Innengewinde 30 versehenen Schraubverbindungskörper, wobei das Innengewinde 30 so ausgestaltet ist, daß es mit dem Außengewinde 10 der Schraube 1 als Schraubverbindung zusammenwirkt. Das Innengewinde 30 ist in einer im Durchmesser abgestuften Axialbohrung 32 der Mutter 2 vorgesehen und erstreckt sich in Axialrichtung nur über einen vorderen Teil der Axialbohrung 32.

In ihrem vom Innengewinde 30 abgewandten Bereich ist die Mutter 2 mit einer Stirnwand 34 versehen, die lediglich im zentralen Bereich von einem Bohrungsabschnitt 32' mit geringerem Durchmesser der Axialbohrung 32 durchdrungen ist. Der Innendurchmesser des Bohrungsabschnitts 32' ist nur geringfügig größer als der Außendurchmesser des zylindrischen Betätigungszapfens 24 des Mitnehmerteils 5, so daß der Betätigungszapfen 24 im Bohrungsabschnitt 32' reibungsfrei in Axialrichtung bewegt werden kann.

In der zum Innengewinde 30 weisenden inneren Stirnfläche 34' der Stirnwand 34 der Mutter 2 sind zwei bezüglich der Längsachse A diametral gegenübergelegene Aufnahmebohrungen 36, 38 als Sacklochbohrungen ausgebildet, in welche jeweils ein Zapfen 37, 39 fest eingesetzt ist. Die Zapfen 37, 39 stehen aus der inneren Stirnfläche 34' der Stirnwand 34 in achsparalleler Richtung hervor und sind an ihrem freien Ende kegelstumpfförmig sich verjüngend ausgestaltet.

Der Mittenabstand der Aufnahmebohrungen 36, 38 und damit der Zapfen 37, 39 entspricht dem Mittendurchmesser des aus den achsparallelen Bohrungen 28 gebildeten ringnutartigen Bohrungskranzes 29, so daß die zwei einander gegenüber gelegenen Zapfen 37, 39 in zwei beliebige, einander bezüglich der Achse A gegenüber gelegenen Bohrungen 28 eintreten können.

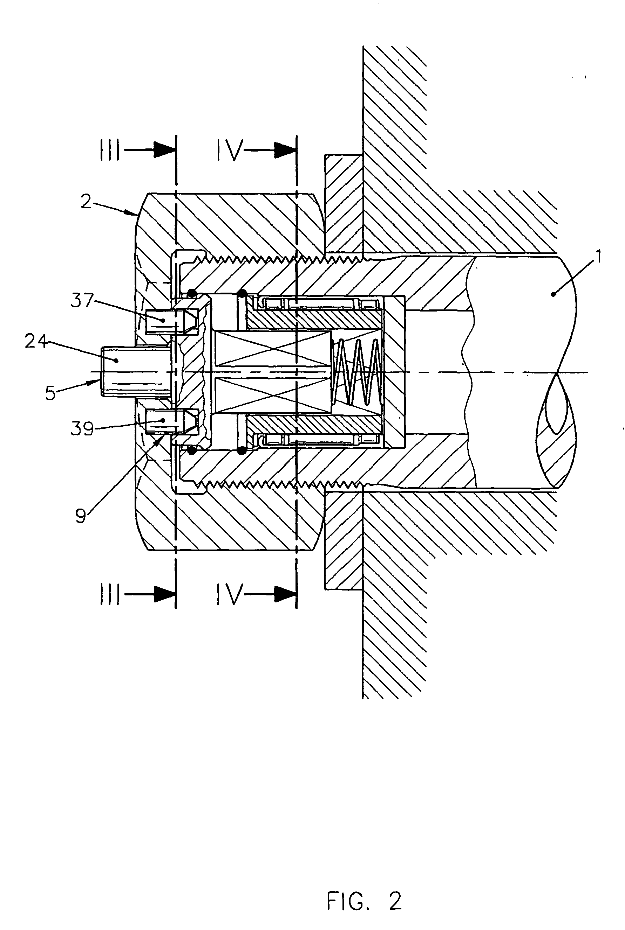

Die Funktionsweise der erfindungsgemäßen Schrauben-Muttern-Anordnung wird nachfolgend unter Bezugnahme auf die Fig. 2 erläutert.

Wird die Mutter 2 aus der in Fig. 1 dargestellten Stellung im Uhrzeigersinn (Pfeil F in Fig. 3) auf den Schraubbolzen 1 aufgeschraubt, so bewegt sich die Stirnfläche 34' der Stirnwand 34 der Mutter 2 auf das freie Ende der Schraube 1 zu, da es sich bei der Gewindepaarung 10, 30 um ein Rechtsgewinde handelt. Hat sich die Mutter 2 so weit an die Schraube 1 angenähert, daß die Zapfen 37, 39 mit ihrem jeweiligen kegelstumpfförmig verjüngten freien Ende in den Bohrungskranz 29 eindringen, so geraten die Zapfen 37, 39 unmittelbar mit zwei diametral gegenübergelegenen achsparallelen Bohrungen 28 in Eingriff. Sobald dieser Eingriff erfolgt ist, wird durch die Drehung der Mutter 2 auch das Mitnehmerteil 5 im Uhrzeigersinn gedreht. Da das Mitnehmerteil 5 mit seinem Vierkantzapfen 18 in der axialen Vierkantöffnung der Führungshülse 4 aufgenommen ist, wird auch die Führungshülse 4 gemeinsam mit der Mutter 2 im Uhrzeigersinn gedreht. Der Freilauf 3 läßt diese Drehung in Richtung des Festziehens der Schrauben-Muttern-Anordnung zu. Entgegen dem Uhrzeigersinn, also in Richtung des Pfeiles L in Fig. 3 sperrt der Freilauf 3, so daß ein Lösen der Schrauben-Muttern-Anordnung nicht möglich ist. Die Mutter 2 wird dann bis zum gewünschten Maß, beispielsweise einem vorgegebenen Drehmoment, auf die Schraube 1 aufgeschraubt, so daß sie in die in Fig. 2 dargestellte Position gelangt, in der die Mutter 2 an einer Unterlegscheibe 6 am Werkstück 7 fest anliegt.

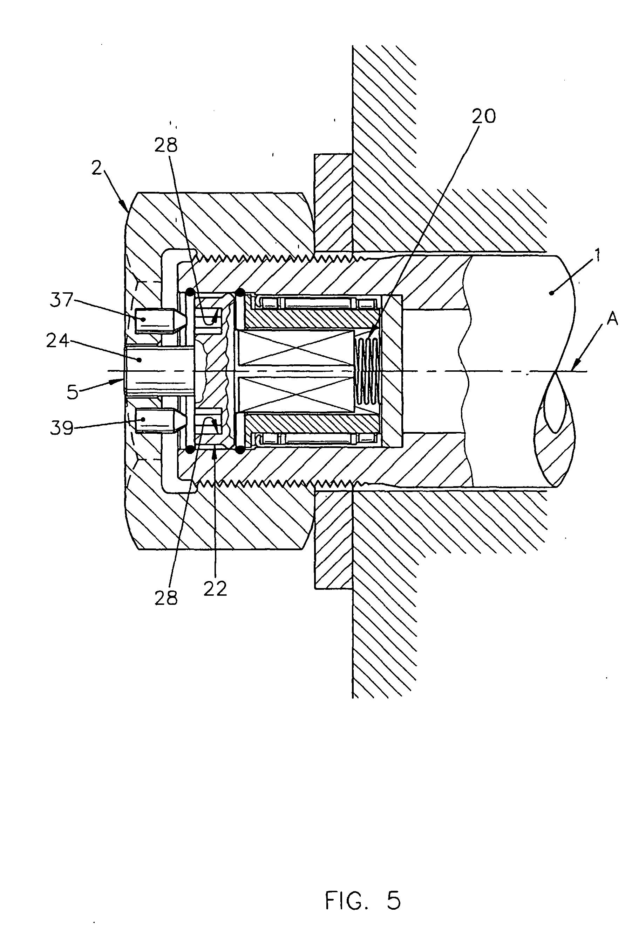

Nachfolgend wird das Lösen der Schrauben-Muttern-Anordnung anhand der Fig. 5 beschrieben.

Zum Lösen der Sperrung der Schrauben-Muttern-Anordnung wird der zylindrische Betätigungszapfen 24 des Mitnehmerteils 5 in Richtung der Achse A manuell oder mittels eines Werkzeugs gegen die Kraft der Druckfeder 20 einwärts gedrückt (in Fig. 5 nach rechts). Dadurch geraten die Zapfen 37, 39 außer Eingriff mit den achsparallelen Bohrungen 28 im mittleren scheibenförmigen Abschnitt 22 des Mitnehmerteils 5.

In dem in Fig. 5 gezeigten Zustand ist die Mutter entriegelt und kann frei entgegen dem Uhrzeigersinn (Richtung L in Fig. 3) gedreht werden, wodurch die von der Schraube 1 und der Mutter 2 gebildete Schraubverbindung gelöst wird. Da die Druckfeder 20 das Mitnehmerteil 5 stets in Richtung auf die Mutter 2 hin (in Fig. 5 nach links) vorspannt, geraten die Zapfen 37, 39 sofort wieder in Eingriff mit zwei achsparallelen Bohrungen 28, wenn der manuell oder vom Werkzeug ausgeübte Druck auf den zylindrischen Betätigungszapfen 24 nicht mehr ausgeübt wird. Ein Lösen der Schrauben-Muttern-Anordnung ist daher nur dann möglich, wenn der Betätigungszapfen 24 und mit ihm das Mitnehmerteil 5 während zumindest einiger Umdrehungen der Mutter 2 in Öffnungsrichtung stets bewußt einwärts (in Fig. 5 nach rechts) gedrückt wird. Die Kraft der Druckfeder 20 ist so stark, daß ein zufälliges Einwärts-Wandern des Mitnehmerteils 5, beispielsweise durch Erschütterungen, nicht möglich ist.

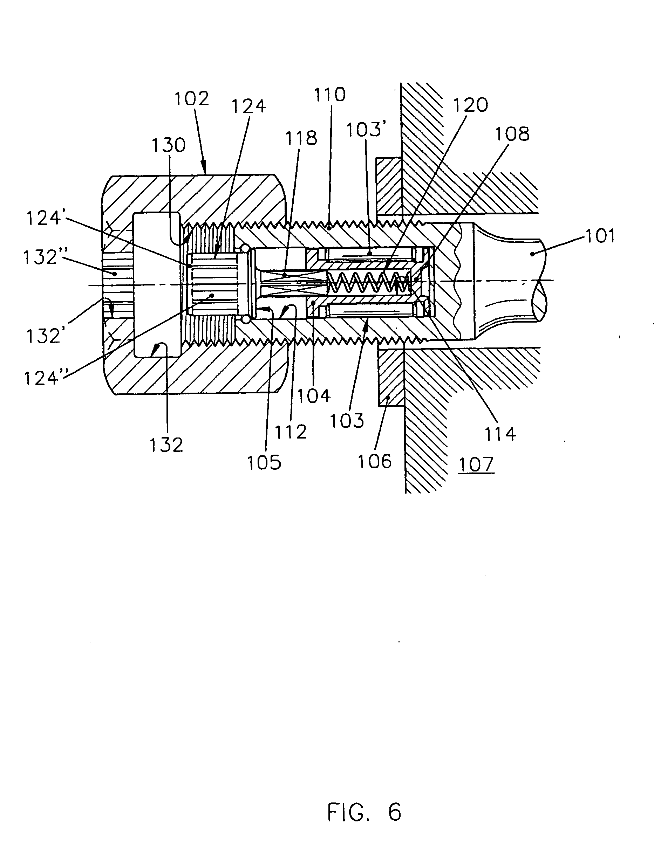

Ein zweites Ausführungsbeispiel wird nun anhand der Fig. 6 bis 10 erläutert. In diesem Beispiel sind die Bezugszeichen gegenüber dem ersten Beispiel der Fig. 1 bis 5 um den Wert 100 erhöht, wodurch ein Vergleich der einzelnen Elemente mit dem ersten Ausführungsbeispiel möglich ist. Es werden daher lediglich die Unterschiede zum ersten Ausführungsbeispiel erläutert.

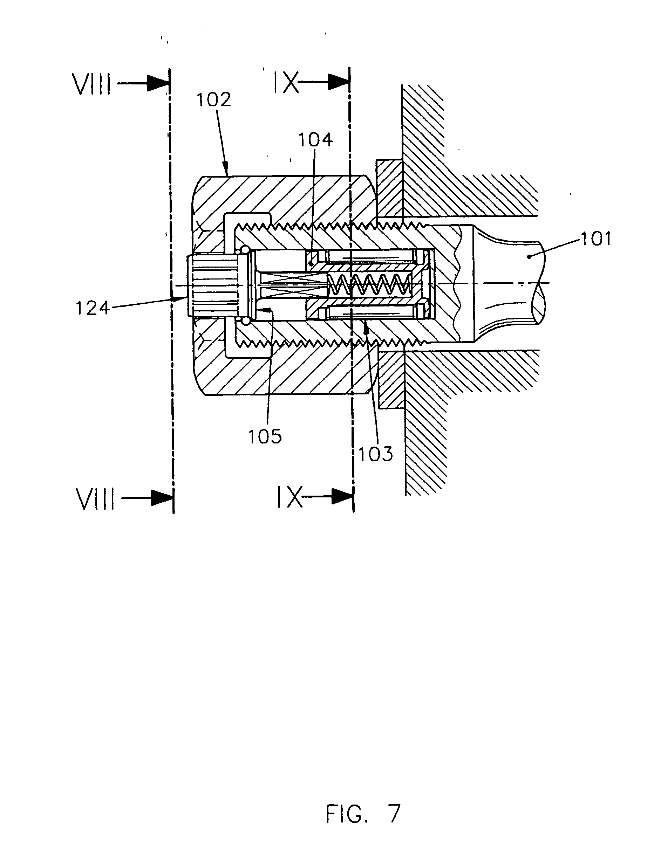

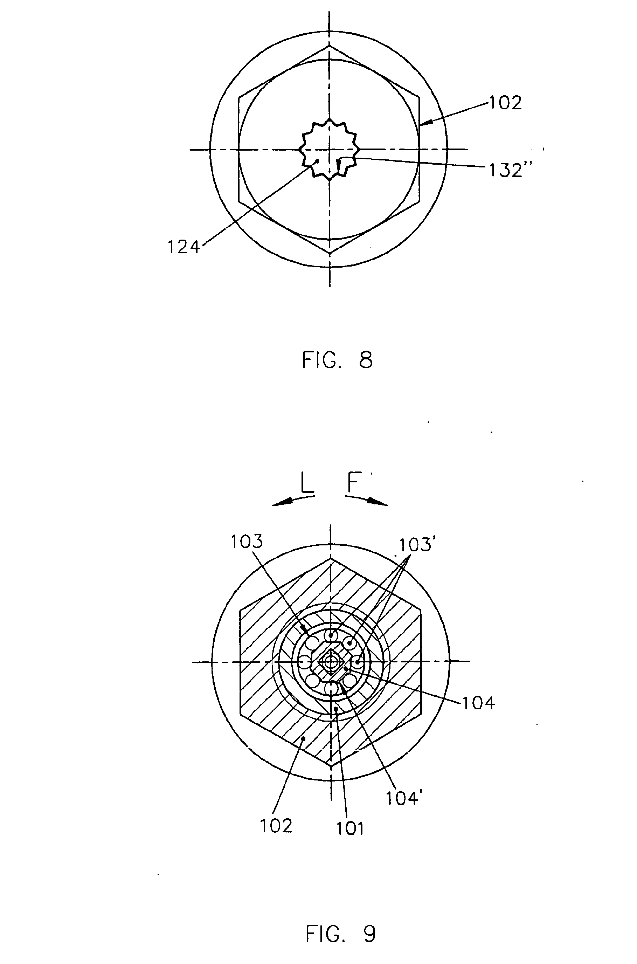

Die Mutter 102 weist anstelle der Zapfen 37, 39 eine Polygonkontur des Innenumfangs des Bohrungsabschnitts 132' mit geringem Durchmesser der Axialbohrung 132 auf. Diese Polygonkontur kann beispielsweise eine Innenverzahnung 132" eines Vielzahnprofils sein, wie in der Stirnansicht der Fig. 8 zu erkennen ist. Dementsprechend ist der zylindrische Betätigungszapfen 124 des Mitnehmerteils 105 an seinem angepaßt polygonal ausgebildeten Außenumfang mit einem entsprechenden Vielzahlprofil 124" aus Außenverzahnung versehen. An seinem freien Ende ist der polygonal ausgebildete Betätigungszapfen 124 mit einem sich konisch verjüngenden Abschnitt 124' versehen, der ein Eingreifen des Innenumfangs-Vielzahnprofils 132" der Mutter 102 mit dem Außenumfangs-Vielzahnprofil 124" des in der Bohrung 112 geführten Mitnehmerteils 105 beim Einschrauben in die Fig. 7 gezeigte Verriegelungsposition erleichtert.

In Fig. 6 ist weiterhin zu erkennen, daß die Führungshülse 104 gegenüber der Führungshülse 4 der ersten Ausführungsform derart abgewandelt ist, daß die axiale Öffnung 114 der Führungshülse 104 nicht durchgehend ist, so daß die Führungshülse 104 einen Boden 108 aufweist, gegen den sich die Druckfeder 120 abstützt.

Die Schrauben-Muttern-Anordnung der zweiten Ausführungsform ist im Aufbau kompakter als die der ersten Ausführungsform, so daß sie auch bei Gewinden 110, 130 mit geringeren Durchmessern eingesetzt werden kann.

In Fig. 7 ist dargestellt, wie sich die Mutter 102 und das Mitnehmerteil 105 mittels der Vielzahnprofile 132" und 124" im drehfesten Verriegelungseingriff befinden. Da die drehfeste Verbindung zwischen dem Mitnehmerteil 105, der Führungshülse 104 und dem Freilauf 103 prinzipiell auf die gleiche Weise gebildet ist, wie im ersten Beispiel, ist auch in der zweiten Ausführungsform eine zuverlässige Sicherung der Schrauben-Muttern-Verbindung gegen unbeabsichtigtes Lösen gegeben.

Der Freilauf 103 ist im Unterschied zur ersten Ausführungsform so ausgebildet, daß die Freilaufwalzen 103' mit Sperrflächen 104' auf einem Außenumfang der Führungshülse 104 zur einseitigen Verriegelung zusammenwirken, wie in Fig. 9 zu erkennen ist.

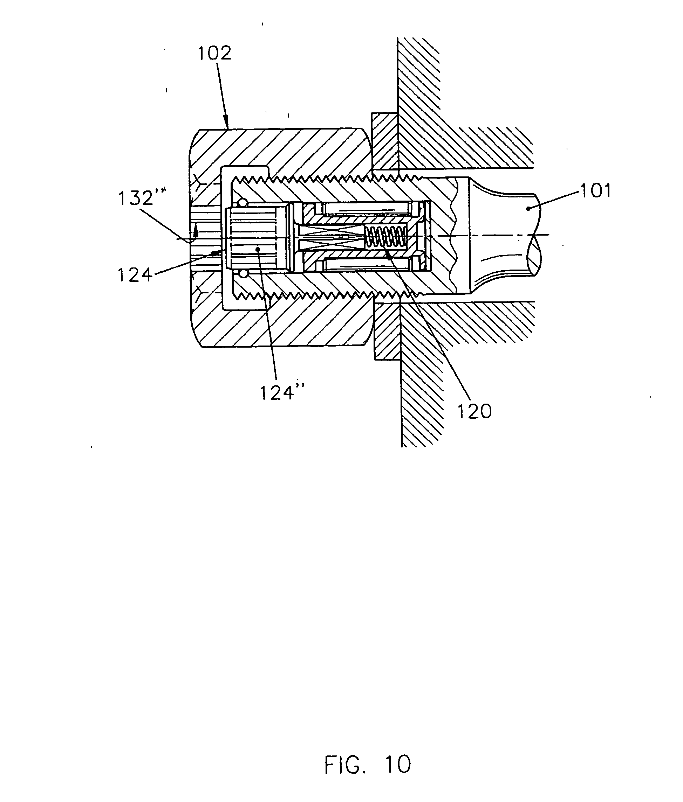

Zum Lösen der Verriegelung zwischen der Mutter 102 und der Schraube 101 wird, ebenso wie dies in Verbindung mit der Fig. 5 für das erste Ausführungsbeispiel beschrieben worden ist, der Betätigungszapfen 124 manuell oder mittels eines Werkzeugs soweit gegen die Kraft der Feder 120 einwärts (in Fig. 10 nach rechts) gedrückt, bis die Vielzahnprofile 132" und 124" außer Eingriff geraten sind. Dann läßt sich die Mutter 102 in Öffnungsrichtung L (entgegen dem Uhrzeigersinn bei einem Rechtsgewinde) lösen.

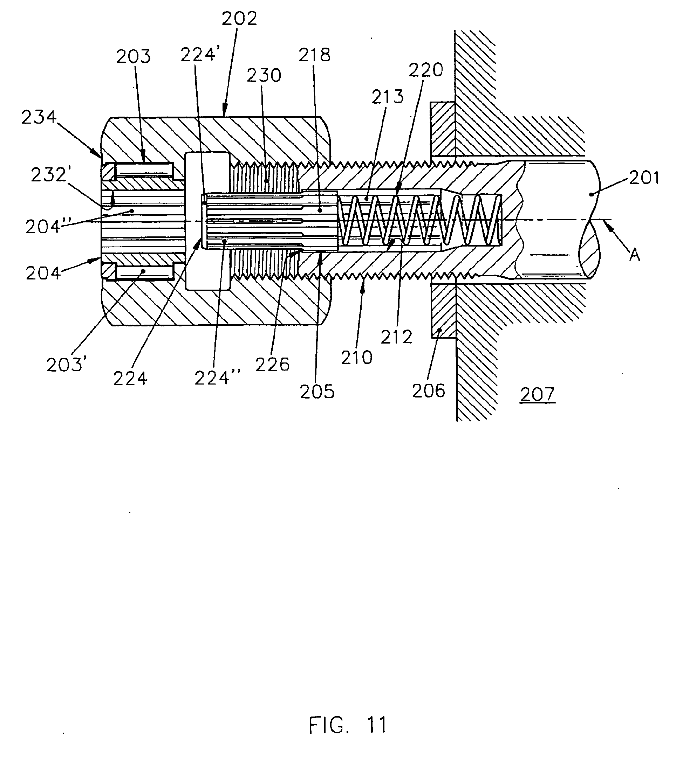

Nachfolgend wird ein drittes Ausführungsbeispiel unter Bezugnahme auf die Fig. 11 bis 15 erläutert. Beim dritten Ausführungsbeispiel sind die Bezugszeichen gegenüber dem ersten Ausführungsbeispiels um den Wert 200 erhöht. Es werden daher lediglich die Abwandlungen des dritten Ausführungsbeispiels gegenüber dem ersten Ausführungsbeispiel beschrieben.

Ein wesentlicher Unterschied der dritten Ausführungsform gegenüber der ersten und zweiten Ausführungsform liegt darin, daß der Freilauf 203 nicht in der Schraube 201, sondern in einer Axialbohrung 231 der Mutter 202 angeordnet ist. Dadurch läßt sich eine noch kompaktere Bauweise der Schrauben-Muttern-Anordnung realisieren, so daß die erfindungsgemäße Sicherung gegen unbeabsichtigtes Lösen auch bei Gewinden 210, 230 mit noch kleineren Durchmessern als bei der zweiten Ausführungsform vorgesehen werden kann.

Die Führungshülse 204 ist bei dieser dritten Ausführungsform in der Stirnwand 234 der Mutter 202 radial innerhalb der Freilaufwalzen 203' des Freilaufs 203 angeordnet und gegen axiales Verschieben gesichert.

In der Schnittansicht der Fig. 13 ist zu erkennen, daß die in einem Käfig angeordneten Freilaufwalzen 203' mit Sperrflächen 204' am Außenumfang der Führungshülse 204 zusammenwirken und so den Freilauf 203 bilden. Bei einer Drehung der Mutter 202 in Uhrzeigerrichtung (Richtung F in Fig. 13) werden die Freilaufwalzen 203' von der Mutter 202 durch Reibung in den Bereich mitgenommen, in dem der radiale Abstand zwischen der Wandung der den Käfig mit den Freilaufwalzen 203' aufnehmenden Bohrung 231 in der Mutter 202 und der Führungshülse 204 ausreichend groß ist, um ein Verklemmen der Freilaufwalzen 203' zwischen der Mutter 202 und der Führungshülse 204 zu verhindern. Zur Erhöhung der Zuverlässigkeit der Verklemmung, insbesondere gegen vibrationsbedingtes Lösen, können die einzelnen Freilaufwalzen 203' innerhalb des (nicht gezeigten) Käfigs durch Federkraft in Sperrichtung (in Fig. 13 entgegen dem Uhrzeigersinn) vorgespannt sein.

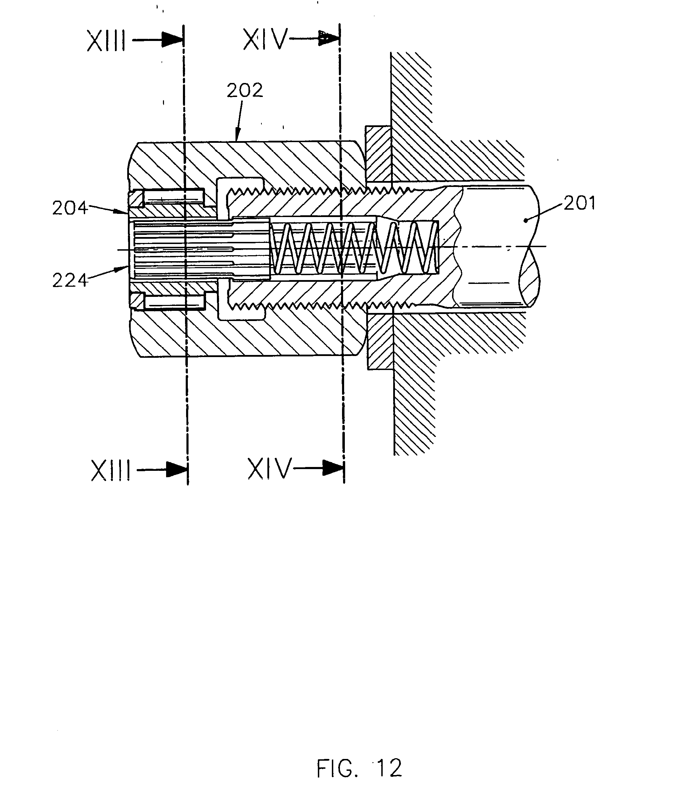

Wird die Mutter 202 in Richtung des Öffnens der Schrauben-Muttern-Anordnung (Gegenuhrzeigerrichtung L in Fig. 13) gedreht, so werden die Freilaufwalzen 203' von der Mutter 202 durch Reibung entgegen dem Uhrzeigersinn mitgenommen und in den Bereich gewälzt, in dem der Abstand zwischen den Sperrflächen 204' der Führungshülse 204 und der Innenumfangsfläche der Axialbohrung 231 in der Mutter 202 kleiner ist als der Durchmesser der Freilaufwalzen 203', so daß die Freilaufwalzen 203' zwischen den Sperrflächen 104' und der Innenumfangsfläche 231 als Sperrwalzen wirken und verklemmen und somit ein Drehen der Mutter 202 in Richtung L verhindern. Diese beschriebene Sperrung tritt dann ein, wenn sich die Führungshülse 204 nicht zusammen mit der Mutter 202 drehen kann, weil sich das ähnlich wie im zweiten Beispiel ausgebildete Vielzahnprofil 224" auf dem Betätigungszapfen 224 des Mitnehmerteils 205 mit einem Vielzahnprofil 204" auf der Innenumfangsfläche der Führungshülse 204 im Eingriff befindet, wie in Fig. 12 zu erkennen ist.

Das Mitnehmerteil 205 ist im dritten Ausführungsbeispiel auf seinem vom Betätigungszapfen 224 abgewandten Endabschnitt ebenfalls mit einem Polygon, beispielsweise einem Vielzahnprofil 218, versehen, welches im Eingriff mit einem entsprechenden Polygon oder Vielzahnprofil 213 auf der Innenumfangsfläche einer Axialbohrung 212 im freien Ende der Schraube 201 steht. Die auf dem Außenumfang des Mitnehmerteils 205 ausgebildeten Vielzahlprofile 218 und 224' sind als ein durchgehendes Vielzahnprofil gebildet, wobei im Bereich des zum Eingriff mit der Führungshülse 204 vorgesehenen Vielzahnprofils 224" lediglich der Außendurchmesser gegenüber dem Bereich mit dem Vielzahlprofil 218 verringert ist. So besitzen das Vielzahnprofil 218 Vollzähne und das Vielzahnprofil 224" Teilzähne, beispielsweise Halbzähne. Diese Teilzahnausgestaltung des Vielzahnprofils 224" ist in der Schnittdarstellung der Fig. 13 zu erkennen. Der Vorteil dieser Ausgestaltung liegt darin, daß nach dem Einsetzen des Vielzahnprofils 218 mit den Vollzähnen in die mit dem Innenvielzahnprofil 213 versehene Axialbohrung 212 der Schraube 201 durch Verstemmen der Öffnung der Axialbohrung 212 auf einen Öffnungsdurchmesser, der geringer ist als der Außendurchmesser des Vielzahnprofils 218, aber größer ist als der Außendurchmesser des Vielzahnprofils 224" mit den Teilzähnen eine axiale Sicherung des Mitnehmerteils 205 gegen Herausfallen aus der Axialbohrung 212 geschaffen werden kann. Diese Verstemmung ist in Fig. 11 zu erkennen und mit dem Bezugszeichen 226 bezeichnet.

Eine Druckfeder 220 belastet in gleicher Weise wie in den ersten beiden Beispielen das Mitnehmerteil 205 nach links, das heißt zur Mutter 202 hin, wobei das Mitnehmerteil 205 durch die Verstemmung 226 an einem Heraustreten aus der Bohrung 212 gehindert ist, so daß es innerhalb der Bohrung 212 gegen die Druckkraft der Feder 220 in Richtung der Achse A verschiebbar ist. Auch in diesem Ausführungsbeispiel ist der Betätigungszapfen 224 an seinem freien Ende mit einer konusförmigen Verjüngung 224' versehen, die ein Eintreten des Vielzahnprofils 224" in das Vielzahnprofil 204" der Führungshülse 204 erleichtert.

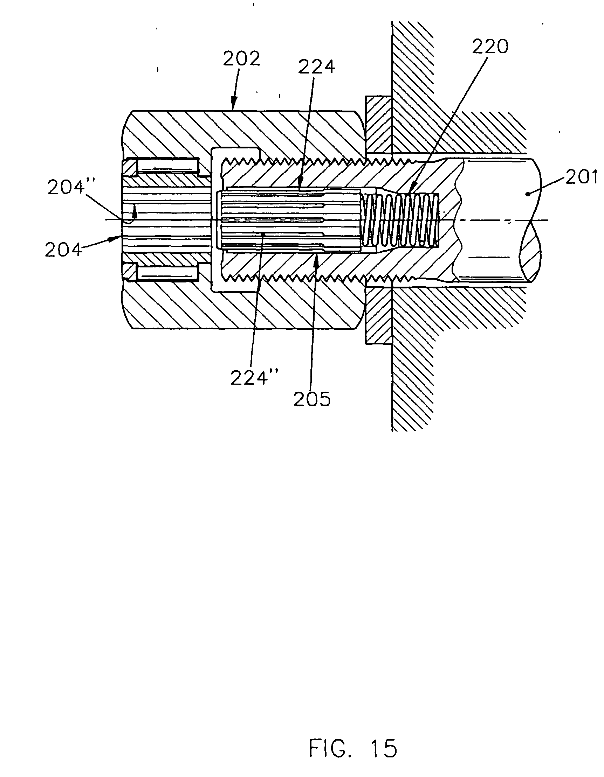

In Fig. 15 ist die Entriegelungsposition der Schrauben-Muttern-Anordnung gemäß der dritten Ausführungsform dargestellt. Der Betätigungszapfen 224 des Mitnehmerteils 205 ist mittels eines Werkzeugs oder manuell soweit einwärts (in Fig. 15 nach rechts) gegen die Kraft der Druckfeder 220 gedrückt, daß das Vielzahnprofil 224" des Betätigungszapfens 224 außer Eingriff mit dem Vielzahnprofil 204" der in der Mutter 202 vorgesehenen Führungshülse 204 getreten ist. Dadurch kann sich beim Verdrehen der Mutter 202 die Führungshülse 204 gemeinsam mit der Mutter 202 drehen, so daß keine Relativbewegung zwischen der Mutter 202 und der Führungshülse 204 mehr stattfindet. Dadurch ist auch die Blockade der Freilaufwalzen 203' an den Sperrflächen 204' aufgehoben, so daß sich die Mutter 202 auch entgegen dem Uhrzeigersinn (in Richtung L in Fig. 13) drehen läßt, wodurch die Schrauben-Muttern-Verbindung wieder gelöst werden kann.

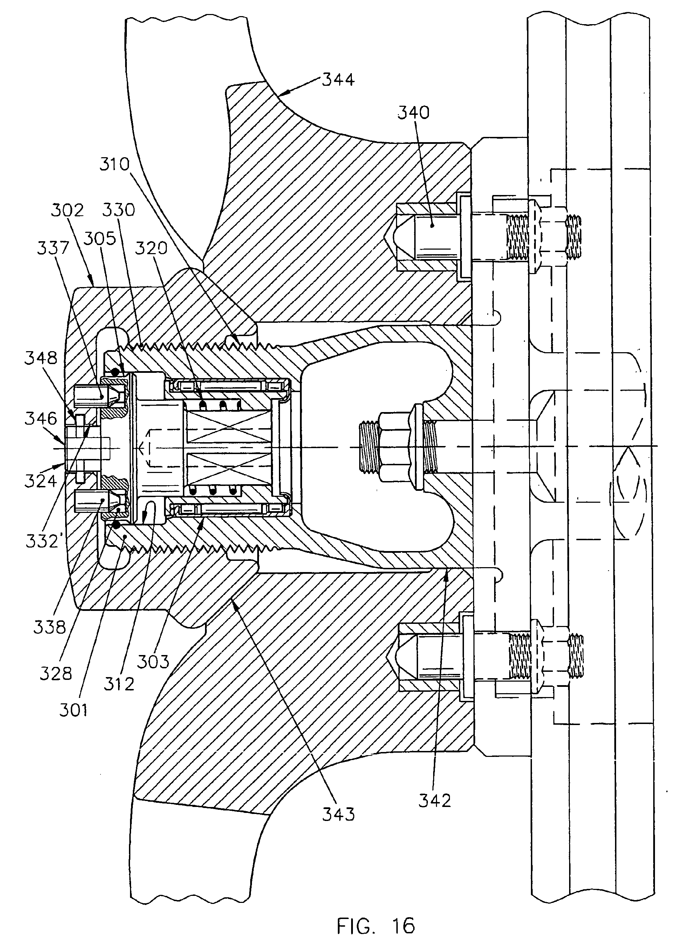

Fig. 16 zeigt eine Anwendung einer Schrauben-Muttern-Anordnung, die gemäß dem in den Fig. 1 bis 5 gezeigten ersten Ausführungsbeispiel ausgestaltet ist, zur zentralen Verschraubung eines Fahrzeugrades. In dieser Figur sind die Bezugszeichen der einzelnen Bauteile des ersten Ausführungsbeispiels um den Wert 300 erhöht.

Die Schraube 301 stellt einen zentralen mit einem Außengewinde 310 versehenen Achsstummel dar. Am Achsstummel sind Paßstifte 340 vorgesehen, welche in entsprechende Ausnehmungen der Nabe einer Radfelge 344 eingreifen, um diese drehfest am Achsstummel anzuordnen. Der Achsstummel ist mit Stützflächen 342 für die Radfelge 344 versehen. Auch die Radmutter 302 weist entsprechende Stützflächen 343 auf.

Die Anwendung der Schrauben-Muttern-Anordnung gemäß der vorliegenden Erfindung auf eine zentrale Radbefestigung sorgt für eine integrierte, hochgradig sichere und sofort wirkende Sicherung des Rades gegen unbeabsichtigtes Lösen mit genau einstellbarem Festzieh-Drehmoment der mit einem Innengewinde 330 versehenen Radmutter 302. Die Vorgehensweise beim Festschrauben und beim Lösen der Radmutter 302 entspricht der in Verbindung mit dem ersten Ausführungsbeispiel beschriebenen Vorgehensweise, wobei auch hier der in der Bohrung 312 der Schraube 301 vorgesehene Freilauf 303 die Verdrehsicherung in Öffnungsrichtung bewirkt.

Wird im Inneren des Betätigungszapfens 324 ein Schloß 346 vorgesehen, von welchem in verschlossenem Zustand zumindest ein Verriegelungselement 348, wie in Fig. 16 schematisch dargestellt ist, radial aus einer Öffnung im Betätigungszapfen in eine entsprechende Aufnahme im Innenumfang des Bohrungsabschnitts 332' eingreift, so ist auf einfache Weise eine Sicherung des Mitnehmers 305 gegen axiales Verschieben gebildet. Es ist somit im verschlossenen Zustand des Schlosses 346 nicht möglich den Betätigungszapfen 324 gegen die Kraft der Druckfeder 320 einwärts zu drücken, um dann die Zapfen 337 und 338 außer Eingriff mit den Zapfenaufnahmen 328 zu bringen und die Mutter 302 zu lösen. Das Schloß 346 im Betätigungszapfen 324 bildet daher eine integrierte Sicherung gegen Räderdiebstahl.

Bei allen Ausführungsformen der Erfindung kann die vom Bohrungsabschnitt 32', 132', 232', 323' gebildete Öffnung in der Mutter, durch die hindurch die Betätigung des zugeordneten Mitnehmers 5, 105, 205, 305 zur Entriegelung erfolgt, versiegelt sein. Dadurch wird bei verschraubter Schrauben-Muttern-Anordnung sofort erkennbar, ob die Schrauben-Muttern-Anordnung unbefugt gelöst und wieder verschraubt worden ist, da die Versiegelung zum Betätigen des Mitnehmers durchstoßen und damit zerstört werden muß.

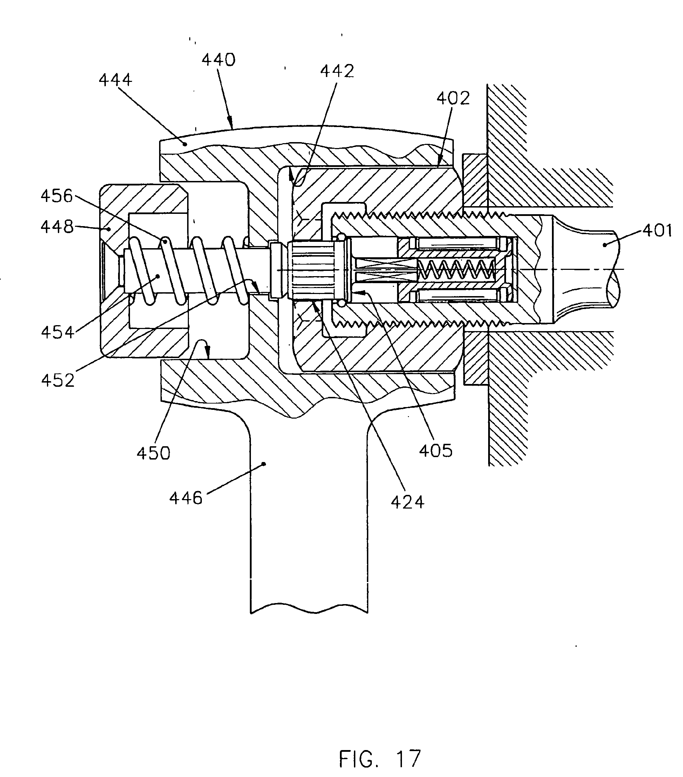

Fig. 17 zeigt schematisch ein Schraubwerkzeug 440 zum Festziehen und insbesondere zum Lösen einer erfindungsgemäßen Schrauben-Muttern-Anordnung. Die in Fig. 17 dargestellte Schrauben-Muttern-Anordnung entspricht der zweiten Ausführungsform, das Schraubwerkzeug 440 kann aber in entsprechender Anpassung auch für die anderen Ausführungsformen ausgebildet sein.

Das Schraubwerkzeug 440 ist auf die Mutter 402 aufgesetzt, wobei die Mutter 402 an ihrem Außenumfang und das Schraubwerkzeug 440 in seiner Muttern-Aufnahmeöffnung 442 ein geeignetes Polygonprofil, beispielsweise ein herkömmliches Sechskantprofil, aufweisen. Die Mutter kann aber auch mit einem Innen-Polygonprofil, beispielsweise einem Innensechskant, versehen sein, wobei das Schraubwerkzeug dann entsprechend mit einem Außenprofil versehen ist. Das Schraubwerkzeug 440 besteht aus einem Kopfabschnitt 444 und einem Hebelabschnitt 446. In seinem Kopfabschnitt 444 ist das Schraubwerkzeug 440 mit einer Drucktaste 448 versehen, die in einer Aufnahmeausnehmung 450 des Schraubwerkzeugs 440 aufgenommen ist. Die Aufnahmeausnehmung 450 für die Drucktaste 448 und die Aufnahmeöffnung 442 für die Mutter 402 sind koaxial angeordnet und durch eine zentrale Bohrung 452 miteinander verbunden. Die Drucktaste 448 ist auf ihrer der zur Aufnahmeöffnung 442 weisenden Rückseite mit einem Auslösezapfen 454 versehen, der zylindrisch ausgebildet ist und sich durch die zentrale Bohrung 452 hindurch in die Aufnahmeöffnung 442 für die Mutter 402 erstreckt. Eine Druckfeder 456 ist in der Aufnahmeausnehmung 450 für die Drucktaste 448, den Auslösezapfen 454 umgebend, angebracht.

Wird die Drucktaste 448 einwärts (in Fig. 17 nach rechts) gedrückt, so gerät der Auslösezapfen 454 mit dem Betätigungszapfen 424 des Mitnehmerteils 405 in Berührung und bei weiterem Eindrücken der Betätigungstaste 448 wird der Betätigungszapfen 424 in die in Fig. 10 gezeigte Entriegelungsposition gedrückt. Die Mutter 402 läßt sich nun mit dem Werkzeug 440 in Öffnungsrichtung drehen und von der Schraube 401 lösen. Um die Betätigungstaste 448 in ihrer eingedrückten Entriegelungsposition für die Schrauben-Muttern-Anordnung zu halten, kann eine (nicht gezeigte) Rastvorrichtung für die Betätigungstaste 448 vorgesehen sein.

Anstelle des in Fig. 17 gezeigten manuell betätigbaren Schraubwerkzeugs 440 kann auch ein allgemein bekanntes automatisches Schraubwerkzeug mit einer entsprechenden Betätigungsvorrichtung zum Entriegeln der erfindungsgemäßen Schrauben-Muttern-Anordnung versehen sein. Alternativ kann das Schraubwerkzeug 440 auch als Adapter für herkömmliche Schraubwerkzeuge ausgestaltet sein.

Obwohl in den beschriebenen Beispielen das Mitnehmerteil im ersten Schraubverbindungskörper (Schraube) angeordnet ist, kann das Mitnehmerteil ebenso im zweiten Schraubverbindungskörper (Mutter) angeordnet sein. Dabei erfolgt die Betätigung der Entriegelung durch eine axiale Öffnung im ersten Schraubverbindungskörper.

Obwohl die erfindungsgemäße Schrauben-Muttern-Anordnung bereits eine hohe Sicherheit gegen unbeabsichtigtes Lösen einer damit gebildeten Schraubverbindung schafft, können zusätzlich noch bekannte mechanische Schrauben-Muttern-Sicherungen vorgesehen sein, falls dies beispielsweise aufgrund sicherheitstechnischer Vorschriften gefordert sein sollte.

Die Erfindung ist nicht auf das obige Ausführungsbeispiel beschränkt, das lediglich der allgemeinen Erläuterung des Kerngedankens der Erfindung dient. Im Rahmen des Schutzumfangs kann die erfindungsgemäße Vorrichtung vielmehr auch andere als die oben beschriebenen Ausgestaltungsformen annehmen.

Bezugszeichen in den Ansprüchen, der Beschreibung und den Zeichnungen dienen lediglich dem besseren Verständnis der Erfindung und sollen den Schutzumfang nicht einschränken.

## Patentansprüche

1. Schrauben-Muttern-Anordnung mit integrierter, sofort wirkender Sicherung gegen unbeabsichtigtes Lösen einer damit gebildeten Schraubverbindung, mit einem ersten Schraubverbindungskörper und einem zugeordneten zweiten Schraubverbindungskörper,
**dadurch gekennzeichnet ,**
- **daß** einer der beiden Schraubverbindungskörper (1; 101; 202; 301) einen drehfest mit diesem verbundenen Freilauf (3; 103; 203; 303) aufweist und
- **daß** zwischen dem Freilauf (3; 103; 203; 303) und dem anderen der beiden Schraubverbindungskörper (2; 102; 201; 302) eine Kupplungsanordnung (9) vorgesehen ist, um die beiden Schraubverbindungskörper drehfest miteinander zu verbinden und voneinander zu lösen.

2. Schrauben-Muttern-Anordnung nach Anspruch 1
**dadurch gekennzeichnet ,**
- **daß** zumindest der erste Schraubverbindungskörper (1; 101; 301) eine Axialbohrung (12; 112; 312) aufweist,
- **daß** der Freilauf (3; 103; 303) in der Axialbohrung (12; 112; 312) des ersten Schraubverbindungskörpers (1; 101; 301) angeordnet ist und ein Mitnehmerteil (5; 105; 305) in der Axialbohrung (12; 112; 312) des ersten Schraubverbindungskörpers (1; 101; 301) in die dem Verschrauben der Schraubverbindung entsprechende Drehrichtung (F) drehbar lagert,
- **daß** der Freilauf (3; 103; 303) in die einem Lösen der Schraubverbindung entsprechende Drehrichtung (L) sperrt,
- **daß** der zweite Schraubverbindungskörper (2; 102; 302) erste Kupplungsmittel (37; 39; 132"; 338) aufweist, die mit zweiten Kupplungsmitteln (28; 124"; 328) am Mitnehmerteil (5; 105; 305) zusammenwirken,
- **daß** die ersten Kupplungsmittel (37; 39; 132"; 338) und die zweiten Kupplungsmittel (28; 124"; 328) so ausgebildet sind, daß sie beim Verschrauben der Schraubverbindungskörper (1; 101; 301; 2; 102; 302) selbsttätig ineinandergreifen und eine drehfeste Verbindung zwischen dem zweiten Schraubverbindungskörper (2; 102; 302) und dem Mitnehmerteil (5; 105; 305) schaffen und
- **daß** eine Entkopplungsvorrichtung (24; 124; 324) vorgesehen ist, um die Kupplungsmittel (37; 39; 132"; 338; 28; 124"; 328) zum Lösen der Schraubverbindung voneinander zu entkoppeln.

3. Schrauben-Muttern-Anordnung nach Anspruch 1
**dadurch gekennzeichnet ,**
- **daß** der erste und der zweite Schraubverbindungskörper (201; 202) jeweils eine Axialbohrung (212; 231) aufweisen,
- **daß** der Freilauf (203) in der Axialbohrung (231) des zweiten Schraubverbindungskörpers (202) angeordnet ist,
- **daß** ein Mitnehmerteil (205) in die Axialbohrung (212) des ersten Schraubverbindungskörpers (201) drehfest eingesetzt ist,
- **daß** der Freilauf (203) erste Kupplungsmittel (204"), die mit zweiten Kupplungsmitteln (224") am Mitnehmerteil (205) zusammenwirken, in die dem Verschrauben der Schraubverbindung entsprechende Drehrichtung (F) drehbar lagert,
- **daß** der Freilauf (203) in die einem Lösen der Schraubverbindung entsprechende Drehrichtung (L) sperrt,
- **daß** die ersten Kupplungsmittel (204") und die zweiten Kupplungsmittel (224") so ausgebildet sind, daß sie beim Verschrauben der Schraubverbindungskörper (201; 202) selbsttätig ineinandergreifen und eine drehfeste Verbindung zwischen dem zweiten Schraubverbindungskörper (202) und dem Mitnehmerteil (205) schaffen und
- **daß** eine Entkopplungsvorrichtung (224) vorgesehen ist, um die Kupplungsmittel (204" 224") zum Lösen der Schraubverbindung voneinander zu entkoppeln.

4. Schrauben-Muttern-Anordnung nach einem der Ansprüche 1 bis 3,
**dadurch gekennzeichnet ,**
**daß** der Freilauf (3) einen Käfig mit Walzen (3') aufweist, die mit rampenartigen Sperrflächen in einem Lagerring (13) zusammenwirken.

5. Schrauben-Muttern-Anordnung nach einem der Ansprüche 1 bis 3,
**dadurch gekennzeichnet ,**
**daß** der Freilauf (103; 203) einen Käfig mit Walzen (103'; 203') aufweist, die mit rampenartigen Sperrflächen (104'; 204') am Außenumfang einer in den mit den Walzen versehenen Käfig eingesetzten Hülse (104; 204) zusammenwirken.

6. Schrauben-Muttern-Anordnung nach einem der Ansprüche 1 bis 3,
**dadurch gekennzeichnet ,**
**daß** der Freilauf einen Käfig mit Walzen aufweist, die mit rampenartigen Sperrflächen am Innenumfang der den mit den Walzen versehenen Käfig aufnehmenden Axialbohrung zusammenwirken.

7. Schrauben-Muttern-Anordnung nach Anspruch 2 oder 3,
**dadurch gekennzeichnet ,**
**daß** das Mitnehmerteil (5; 105; 205; 305) in der Axialbohrung (12; 112; 212; 312) axial verschiebbar aufgenommen ist.

8. Schrauben-Muttern-Anordnung nach Anspruch 7,
**dadurch gekennzeichnet ,**
**daß** das Mitnehmerteil (5; 105; 205; 305) von einem federnden Element (20; 120; 220; 320) in Richtung jenes axialen Endes des ersten Schraubverbindungskörpers (1; 101; 201; 301) vorgespannt ist, von dem aus der zweite Schraubverbindungskörper (2; 102; 202; 302) mit dem ersten Schraubverbindungskörper (1; 101; 201; 301) verschraubt wird.

9. Schrauben-Muttern-Anordnung nach Anspruch 2,
**dadurch gekennzeichnet ,**
**daß** die ersten Kupplungsmittel (37, 39; 338) oder die zweiten Kupplungsmittel (28; 328) von Zapfen gebildet sind und daß die Gegenkupplungsmittel (28; 328 oder 37; 39; 338) von zugeordneten Zapfenaufnahmen gebildet sind.

10. Schrauben-Muttern-Anordnung nach Anspruch 9,
**dadurch gekennzeichnet ,**
**daß** sich die Zapfen (37, 39; 338) und die Zapfenaufnahmen (28; 328) mit ihren jeweiligen Längsachsen parallel zur Axialrichtung der Anordnung erstrecken.

11. Schrauben-Muttern-Anordnung nach Anspruch 10,
**dadurch gekennzeichnet ,**
**daß** die Zapfenaufnahmen (28; 328) in einer Stirnseite des Mitnehmerteils (5; 305) ausgebildet sind und daß die Zapfen (37, 39; 338) aus einer entsprechenden Radialfläche des zweiten Schraubverbindungskörpers (2; 302) hervorstehen.

12. Schrauben-Muttern-Anordnung nach Anspruch 10,
**dadurch gekennzeichnet ,**
**daß** die Zapfenaufnahmen in einer Radialfläche des zweiten Schraubverbindungskörpers ausgebildet sind und daß die Zapfen aus der Stirnseite des Mitnehmerteils hervorstehen.

13. Schrauben-Muttern-Anordnung nach einem der Ansprüche 10 bis 12,
**dadurch gekennzeichnet ,**
- **daß** die Zapfen (37, 39; 338) und die Zapfenaufnahmen (28; 328) kreisringförmig angeordnet sind,
- **daß** sich einander benachbarte Zapfenaufnahmen (28; 328) überschneiden, so daß die Zapfenaufnahmen (28; 328) ringnutartig miteinander verbunden sind und
- **daß** die Zapfen (37, 39; 338) jeweils am freien Ende verjüngt ausgebildet sind.

14. Schrauben-Muttern-Anordnung nach Anspruch 2 oder 3,
**dadurch gekennzeichnet ,**
**daß** der zweite Schraubverbindungskörper (2; 102; 202; 302) eine Öffnung, vorzugsweise eine zentrale axiale Öffnung, aufweist, durch die hindurch das Mitnehmerteil (5; 105; 205; 305) zur Axialverschiebung betätigbar ist.

15. Schrauben-Muttern-Anordnung nach Anspruch 2 oder 3,
**dadurch gekennzeichnet ,**
**daß** der erste, das Mitnehmerteil (5; 105; 205; 305) aufweisende Schraubverbindungskörper (1; 101; 201; 301) mit einem Außengewinde (10; 110; 210; 310) versehen ist und daß der zweite Schraubverbindungskörper (2; 102; 202; 302) mit einem Innengewinde (30; 130; 230; 330) als Mutter ausgebildet ist.

16. Schrauben-Muttern-Anordnung nach Anspruch 2 oder 3,
**dadurch gekennzeichnet ,**
**daß** ein Schloß (346) vorgesehen ist, welches im gesperrten Zustand ein Lösen der Kupplungsmittel voneinander verhindert.

17. Verwendung einer Schrauben-Muttern-Anordnung gemäß einem der vorhergehenden Ansprüche in einem Zentralverschluß für ein Fahrzeugrad.

18. Kombination aus einer Schrauben-Muttern-Anordnung gemäß einem der Ansprüche 2, 3 oder 7 bis 16 und einem Schraubwerkzeug zum Herstellen und zum Lösen einer Schraubverbindung mit einer Schrauben-Muttern-Anordnung gemäß einem der Ansprüche 2, 3 oder 7 bis 16, mit einem Profil, welches zur drehfesten Kopplung mit einem Gegenprofil an einem der Schraubverbindungskörper zusammenwirkt,
**dadurch gekennzeichnet ,**
**daß** das Schraubwerkzeug (440) mit einer Betätigungsvorrichtung versehen ist, die in eine Entriegelungsposition bringbar ist, in der das Mitnehmerteil (405) in Axialrichtung verschoben ist, um zum Lösen der Schraubverbindung die ersten Kupplungsmittel von den zweiten Kupplungsmitteln zu entkoppeln.

19. Kombination nach Anspruch 18,
**dadurch gekennzeichnet ,**
**daß** am Schraubwerkzeug (440) ein Betätigungselement (448, 454) vorgesehen ist, das zum Lösen der Schraubverbindung zum Entkoppeln der Kupplungsmittel voneinander das Mitnehmerteil (405) in Axialrichtung verschiebt.

20. Kombination nach Anspruch 18 oder 19,
**dadurch gekennzeichnet ,**
**daß** das Schraubwerkzeug (440) als Adapter für ein herkömmliches Schraubwerkzeug ausgebildet ist.

## Claims

1. Screw-nut assembly including an integrated, immediately effective securing arrangement for preventing unintentional loosening of a screwed connection formed thereby, comprising a first screw connection body and an associated second screw connection body,
**characterised**
- **in that** one of the two screw connection bodies (1; 101; 202; 301) comprises a free-wheel mechanism (3; 103; 203; 303) which is connected thereto in mutually non-rotatable manner and
- **in that** a coupling arrangement (9) is provided between the free-wheel mechanism (3; 103; 203; 303) and the other one of the two screw connection bodies (2; 102; 201; 302) in order to connect the two screw connection bodies together in mutually non-rotatable manner and to release them from one another.

2. Screw-nut assembly in accordance with claim 1
**characterised,**
- **in that** at least the first screw connection body (1; 101; 301) comprises an axial boring (12; 112; 312),
- **in that** the free-wheel mechanism (3; 103; 303) is arranged in the axial boring (12; 112; 312) of the first screw connection body (1; 101; 301) and carries a driver member (5; 105; 305) in the axial boring (12; 112; 312) of the first screw connection body (1; 101; 301) such that it is rotatable in the direction of rotation (F) corresponding to the tightening of the screwed connection,
- **in that** the free-wheel mechanism (3; 103; 303) blocks movement in the direction of rotation (L) corresponding to a loosening of the screwed connection,
- **in that** the second screw connection body (2; 102; 302) comprises first coupling means (37; 38; 132"; 338) which co-operate with second coupling means (28; 124"; 328) on the driver member (5; 105; 305),
- **in that** the first coupling means (37; 38; 132"; 338) and the second coupling means (28; 124"; 328) are formed in such a manner that they automatically engage with one another when the screw connection bodies (1; 101; 301; 2; 102; 302) are being tightened and create a mutually non-rotatable connection between the second screw connection body (2; 102; 302) and the driver member (5; 105; 305) and
- **in that** an uncoupling device (24; 124; 324) is provided in order to uncouple the coupling means (37; 38; 132"; 338; 28; 124"; 328) from one another for the purposes of loosening the screwed connection.

3. Screw-nut assembly in accordance with claim 1
**characterised,**
- **in that** the first and the second screw connection bodies (201; 202) each comprise a respective axial boring (212; 231),
- **in that** the free-wheel mechanism (203) is arranged in the axial boring (231) of the second screw connection body (202),
- **in that** a driver member (205) is inserted into the axial boring (212) of the first screw connection body (201) in mutually non-rotatable manner,
- **in that** the free-wheel mechanism (203) carries first coupling means (204") which co-operate with second coupling means (224") on the driver member (205) and which are adapted to rotate in the direction of rotation (F) corresponding to the tightening of the screwed connection,
- **in that** the free-wheel mechanism (203) blocks movement in the direction of rotation (L) corresponding to a loosening of the screwed connection,
- **in that** the first coupling means (204") and the second coupling means (224") are formed in such a manner that they automatically engage with one another when tightening the screw connection bodies (201; 202) and create a mutually non-rotatable connection between the second screw connection body (202) and the driver member (205) and
- **in that** an uncoupling device (224) is provided in order to uncouple the coupling means (204" 224") from one another for the purposes of loosening the screwed connection.

4. Screw-nut assembly in accordance with any of the claims 1 to 3,
**characterised**
**in that** the free-wheel mechanism (3) comprises a cage containing rollers (3') which co-operate with ramp-like blocking surfaces in a bearing ring (13).

5. Screw-nut assembly in accordance with any of the claims 1 to 3,
**characterised**
**in that** the free-wheel mechanism (103; 203) comprises a cage containing rollers (103'; 203') which co-operate with ramp-like blocking surfaces (104'; 204') on the outer periphery of a sleeve (104; 204) that is inserted into the cage provided with the rollers.

6. Screw-nut assembly in accordance with any of the claims 1 to 3,
**characterised**
**in that** the free-wheel mechanism comprises a cage containing rollers which co-operate with ramp-like blocking surfaces on the inner periphery of the axial boring accommodating the cage provided with the rollers.

7. Screw-nut assembly in accordance with claim 2 or 3,
**characterised**
**in that** the driver member (5; 105; 205; 305) is accommodated in the axial boring (12; 112; 212; 312) in axially displaceable manner.

8. Screw-nut assembly in accordance with claim 7,
**characterised**
**in that** the driver member (5; 105; 205; 305) is biased by a springy element (20; 120; 220; 320) in the direction of that axial end of the first screw connection body (1; 101; 201; 301) from which the second screw connection body (2; 102; 202; 302) is screwed onto the first screw connection body (1; 101; 201; 301).

9. Screw-nut assembly in accordance with claim 2,
**characterised**
**in that** the first coupling means (37, 38; 338) or the second coupling means (28; 328) are formed by studs and in that the counter-coupling means (28; 328 or 37; 38; 338) are formed by associated stud seatings.

10. Screw-nut assembly in accordance with claim 9,
**characterised**
**in that** the respective longitudinal axes of the studs (37, 38; 338) and the stud seatings (28; 328) extend in parallel with the axial direction of the assembly.

11. Screw-nut assembly in accordance with claim 10,
**characterised**
**in that** the stud seatings (28; 328) are formed in an end face of the driver member (5; 305) and in that the studs (37, 38; 338) project out from a corresponding radial surface of the second screw connection body (2; 302).

12. Screw-nut assembly in accordance with claim 10,
**characterised**
**in that** the stud seatings are formed in a radial surface of the second screw connection body and in that the studs project out from the end face of the driver member.

13. Screw-nut assembly in accordance with any of the claims 10 to 12,
**characterised**
- **in that** the studs (37, 38; 338) and the stud seatings (28; 328) are arranged in the form of a circle,
- **in that** mutually adjacent stud seatings (28; 328) overlap so that the stud seatings (28; 328) are connected together in the manner of an annular groove and
- **in that** the free ends of the respective studs (37, 38; 338) are tapered.

14. Screw-nut assembly in accordance with claim 2 or 3,
**characterised**
**in that** the second screw connection body (2; 102; 202; 302) comprises an opening, preferably a central axial opening through which the driver member (5; 105; 205; 305) is operable for axial displacement.

15. Screw-nut assembly in accordance with claim 2 or 3,
**characterised**
**in that** the first screw connection body (1; 101; 201; 301) comprising the driver member (5; 105; 205; 305) is provided with an external thread (10; 110; 210; 310) and
**in that** the second screw connection body (2; 102; 202; 302) is formed with an internal thread (30; 130; 230; 330) acting as a nut.

16. Screw-nut assembly in accordance with claim 2 or 3,
**characterised**
**in that** there is provided a lock (346) which prevents the coupling means from loosening when it is in the locked state.

17. Use of a screw-nut assembly in accordance with any of the preceding Claims in a central quick-release arrangement for a vehicle wheel.

18. Combination of a screw-nut assembly in accordance with any of the claims 2, 3 or 7 to 16 and a screw-operating tool for producing and loosening a screwed connection with a screw-nut assembly in accordance with any of the claims 2, 3 or 7 to 16, having a profile which co-operates with a counter profile on one of the screw connection bodies for the purposes of producing a mutually non-rotatable coupling,
**characterised**
**in that** the screw-operating tool (440) is provided with an actuator which can be brought into an unlocking position in which the driver member (405) is displaced in an axial direction in order to uncouple the first coupling means from the second coupling means for loosening the screwed connection.

19. Combination in accordance with claim 18,
**characterised**
**in that** an actuator (448, 454) is provided at the screw-operating tool (440), which actuator displaces the driver member (405) in the axial direction for loosening the screwed connection in order to uncouple the coupling means from one another.

20. A screw-operating tool in accordance with claim 18 or 19,
**characterised**
**in that** the screw-operating tool (440) is in the form of an adapter for a conventional screw-operating tool.

## Revendications

1. Agencement vis-écrou à blocage intégré à effet immédiat à l'encontre d'un détachement accidentel d'un assemblage vissé ainsi obtenu, comportant un premier corps de liaison vissée et un second corps de liaison vissée associé,
**caractérisé en ce que**
- l'un des deux corps de liaison vissée (1 ; 101 ; 202 ; 301) présente une roue libre (3 ; 103 ; 203 ; 303) reliée solidairement en rotation à celui-ci, et
- entre la roue libre (3 ; 103 ; 203 ; 303) et l'autre des deux corps de liaison vissée (2 ; 102 ; 201 ; 302) est prévu un dispositif d'accouplement (9) pour relier solidairement en rotation les deux corps de liaison vissée et pour les détacher l'un de l'autre.

2. Agencement vis-écrou selon la revendication 1,
**caractérisé en ce que**
- au moins le premier corps de liaison vissée (1 ; 101 ; 301) présente un perçage axial (12 ; 112 ; 312),
- la roue libre (3 ; 103 ; 303) est agencée dans le perçage axial (12 ; 112 ; 312) du premier corps de liaison vissée (1 ; 101 ; 301) et un élément d'entraînement (5 ; 105 ; 305) est monté mobile en rotation dans le perçage axial (12 ; 112 ; 312) du premier corps de liaison vissée (1 ; 101 ; 301) dans la direction de rotation (F) qui correspond au vissage de la liaison vissée,
- la roue libre (3 ; 103 ; 303) bloque dans la direction de rotation (L) qui correspond à un détachement de la liaison vissée,
- le second corps de liaison vissée (2 ; 102 ; 302) comprend de premiers moyens d'accouplement (37 ; 39 ; 132" ; 338) qui coopèrent avec des seconds moyens d'accouplement (28 ; 124" ; 328) sur l'élément d'entraînement (5 ; 105 ; 305),
- les premiers moyens d'accouplement (37 ; 39 ; 132" ; 338) et les seconds moyens d'accouplement (28 ; 124" ; 328) sont réalisés de manière à s'engager automatiquement lors du vissage des corps de liaison vissée (1 ; 101 ; 301 ; 2 ; 102 ; 302) et établissent une liaison solidaire en rotation entre le second corps de liaison vissée (2 ; 102 ; 302) et l'élément d'entraînement (5 ; 105 ; 305), et
- il est prévu un dispositif de désaccouplement (24 ; 124 ; 324) pour désaccoupler les moyens d'accouplement (37 ; 39 ; 132" ; 338 ; 28 ; 124" ; 328) en vue de détacher la liaison vissée.

3. Agencement vis-écrou selon la revendication 1,
**caractérisé en ce que**
- le premier et le second corps de liaison vissée (201 ; 202) présentent chacun un perçage axial (212 ; 231),
- la roue libre (203) est agencée dans le perçage axial (231) du second corps de liaison vissée (202),
- un élément d'entraînement (205) est mis en place solidairement en rotation dans le perçage axial (212) du premier corps de liaison vissée (201),
- la roue libre (203) reçoit, avec faculté de rotation dans la direction de rotation (F) correspondant au vissage de la liaison vissée, des premiers moyens d'accouplement (204") qui coopèrent avec des seconds moyens d'accouplement (224") sur l'élément d'entraînement (205),
- la roue libre (203) bloque dans la direction de rotation (L) qui correspond à un détachement de la liaison vissée,
- les premiers moyens d'accouplement (204") et les seconds moyens d'accouplement (224") sont réalisés de manière à s'engager automatiquement les uns dans les autres lors du vissage des corps de liaison vissée (201 ; 202) et établissent une liaison solidaire en rotation entre le second corps de liaison vissée (202) et l'élément d'entraînement (205), et
- il est prévu un dispositif de désaccouplement (224) pour désaccoupler les moyens d'accouplement (204" ; 224") en vue de détacher la liaison vissée.

4. Agencement vis-écrou selon l'une des revendications 1 à 3,
**caractérisé en ce que**
la roue libre (3) comprend une cage à rouleaux (3') qui coopèrent avec des surfaces de blocage en forme de rampes dans une bague de palier (13).

5. Agencement vis-écrou selon l'une des revendications 1 à 3,
**caractérisé en ce que**
la roue libre (103 ; 203) comprend une cage à rouleaux (103' ; 203') qui coopèrent avec des surfaces de blocage (104' ; 204) en forme de rampes sur la périphérie extérieure d'une douille (104 ; 204) mise en place dans la cage pourvue des rouleaux.

6. Agencement vis-écrou selon l'une des revendications 1 à 3,
**caractérisé en ce que**
la roue libre comprend une cage à rouleaux qui coopèrent avec des surfaces de blocage en forme de rampes sur la périphérie intérieure du perçage axial recevant la cage pourvue des rouleaux.

7. Agencement vis-écrou selon la revendication 2 ou 3,
**caractérisé en ce que**
l'élément d'entraînement (5 ; 105 ; 205 ; 305) est reçu en translation axiale dans le perçage axial (12 ; 112 ; 212 ; 312).

8. Agencement vis-écrou selon la revendication 7,
**caractérisé en ce que**
l'élément d'entraînement (5 ; 105 ; 205 ; 305) est précontraint par un élément à effet ressort (20 ; 120 ; 220 ; 320) dans la direction de cette extrémité axiale du premier corps de liaison vissée (1 ; 101 ; 201 ; 301) à partir de laquelle le second corps de liaison vissée (2 ; 102 ; 202 ; 302) est vissé au premier corps de liaison vissée (1 ; 101 ; 201 ; 301).

9. Agencement vis-écrou selon la revendication 2,
**caractérisé en ce que**
les premiers moyens d'accouplement (37, 39 ; 338) ou les seconds moyens d'accouplement (28 ; 328) sont réalisés par des tenons, et **en ce que** les moyens d'accouplement complémentaires (28 ; 328 ou 37 ; 39 ; 338) sont formés par des logements à tenon associés.

10. Agencement vis-écrou selon la revendication 9,
**caractérisé en ce que**
les tenons (37, 39 ; 338) et les logements à tenon (28 ; 328) s'étendent par leurs axes longitudinaux respectifs parallèlement à la direction axiale de l'agencement.

11. Agencement vis-écrou selon la revendication 10,
**caractérisé en ce que**
les logements à tenon (28 ; 328) sont ménagés dans une face frontale de l'élément d'entraînement (5 ; 305), et **en ce que** les tenons (37, 39 ; 338) dépassent d'une surface radiale correspondante du second corps de liaison vissée (2 ; 302).

12. Agencement vis-écrou selon la revendication 10,
**caractérisé en ce que**
les logements à tenon sont ménagés dans une surface radiale du second corps de liaison vissée, et **en ce que** les tenons dépassent de la face frontale de l'élément d'entraînement.

13. Agencement vis-écrou selon l'une des revendications 10 à 12,
**caractérisé en ce que**
- les tenons (37, 39 ; 338) et les logements à tenon (28 ; 328) sont agencés en forme d'anneau de cercle,
- des logements à tenon (28 ; 328) mutuellement voisins se recoupent, de sorte que les logements à tenon (28 ; 328) sont reliés entre eux à la manière d'une gorge annulaire, et
- les tenons (37, 39 ; 338) sont réalisés rétrécis à l'extrémité libre respective.

14. Agencement vis-écrou selon la revendication 2 ou 3,
**caractérisé en ce que**
le second corps de liaison vissée (2 ; 102 ; 202 ; 302) présente une ouverture, de préférence une ouverture axiale centrale à travers laquelle l'élément d'entraînement (5 ; 105 ; 205 ; 305) est actionnable pour la translation axiale.

15. Agencement vis-écrou selon la revendication 2 ou 3,
**caractérisé en ce que**
le premier corps de liaison vissée (1 ; 101 ; 201 ; 301) présentant l'élément d'entraînement (5 ; 105 ; 205 ; 305) est pourvu d'un filetage (10 ; 110 ; 210 ; 310), et **en ce que** le second corps de liaison vissée (2 ; 102 ; 202 ; 302) est réalisé comme écrou avec un taraudage (30 ; 130 ; 230 ; 330).

16. Agencement vis-écrou selon la revendication 2 ou 3,
**caractérisé en ce que**
il est prévu un verrou (346) qui, dans l'état bloqué, empêche un détachement des moyens d'accouplement l'un de l'autre.

17. Application d'un agencement vis-écrou selon l'une des revendications précédentes dans un verrouillage centralisé pour une roue de véhicule.

18. Combinaison d'un agencement vis-écrou selon l'une des revendications 2, 3 ou 7 à 16 et d'un outil de vissage pour établir et détacher une liaison vissée avec un agencement vis-écrou selon l'une des revendications 2, 3 ou 7 à 16, présentant un profil qui, en vue d'un accouplement solidaire en rotation, coopère avec un profil complémentaire sur l'un des corps de liaison vissée,
**caractérisée en ce que**
l'outil de vissage (440) est pourvu d'un dispositif d'actionnement qui est susceptible d'être amené dans une position de déverrouillage dans laquelle l'élément d'entraînement (405) est déplacé en direction axiale pour désaccoupler les premiers moyens d'accouplement des seconds moyens d'accouplement, en vue de détacher la liaison vissée.

19. Combinaison selon la revendication 18,
**caractérisée en ce que**
sur l'outil de vissage (440) est prévu un élément d'actionnement (448, 454) qui déplace l'élément d'entraînement (405) en direction axiale pour détacher la liaison vissée en vue de désaccoupler les moyens d'accouplement l'un de l'autre.

20. Combinaison selon la revendication 18 ou 19,
**caractérisée en ce que**
l'outil de vissage (440) est réalisé sous forme d'adaptateur pour un outil de vissage habituel.
